# EUROPÄISCHE PATENTSCHRIFT

(11) **EP 2 233 103 B1**
(45) Veröffentlichungstag und Bekanntmachung des Hinweises auf die Patenterteilung: **15.11.2017**
(21) Anmeldenummer: 09006196.1
(22) Anmeldetag: 07.05.2009
(51) Int. Cl.: A61C 1/14, B23B 31/02, A61B 17/16

(54) **Medizinisches, insbesondere dentales, Handstück**
Medical, in particular dental handpiece
Pièce à main médicale, en particulier dentaire

(30) Priorität: 26.03.2009 EP 09004327
(43) Veröffentlichungstag der Anmeldung: 29.09.2010
(73) Patentinhaber: W & H Dentalwerk Bürmoos GmbH, 5111 Bürmoos (AT)
(72) Erfinder: Mangelberger, Michael, 5113 St. Georgen (AT); Pruckner, Christian, 1190 Wien (AT); Teufelberger, Gunther, 5111 Bürmoos (AT); Wagner, Hannes, 5023 Salzburg (AT); Kaineder, Gerhard, 4203 Altenberg bei Linz (AT); Schimbäck, Erwin, 4310 Mauthausen (AT)
(74) Vertreter: Benda, Ralf

(56) Entgegenhaltungen:
- DE-A1- 10 045 116
- US-A- 3 731 385
- US-A- 4 110 908
- US-A1- 2003 093 103

## Beschreibung

Die vorliegende Erfindung betrifft ein medizinisches, insbesondere dentales, Handstück mit einer Spule zum induktiven Energie- und / oder Datenaustausch gemäß dem Oberbegriff des Anspruchs 1.

Ein derartiges Handstück ist aus der Patentanmeldung US 2003/0093103 A1 bekannt. Das Handstück umfasst eine Außenhülse, in der eine Bohrung zum Einsetzen eines Behandlungswerkzeugs vorgesehen ist. In der Bohrung ist des Weiteren eine Antriebswelle vorgesehen, die mit dem Behandlungswerkzeug kuppelbar ist, so dass das Behandlungswerkzeug in eine Drehbewegung versetzbar ist. Am Behandlungswerkzeug ist eine Speichereinheit vorgesehen, die einen Speicher für zum Beispiel Identifikations- oder Betriebsdaten des Behandlungswerkzeugs und eine mit dem Speicher verbundene Spule umfasst. Die Spule der Speichereinheit ist mit einer weiteren Spule des Handstücks induktiv gekoppelt, so dass Daten und Versorgungsenergie für den Speicher vom Handstück auf die Speichereinheit des Behandlungswerkzeugs und Daten vom Speicher auf das Handstück übertragbar sind.

Die Spule des Handstücks ist am Vorderende des Handstücks in einer Aufnahme oder in einem Rücksprung der Außenhülse des Handstücks angeordnet. Die Aufnahme oder der Rücksprung für die Spule ist über Spalten und / oder die Bohrung zum Einsetzen des Behandlungswerkzeugs mit der Umgebung verbunden, so dass die Gefahr besteht, dass Behandlungsflüssigkeiten, Partikel oder andere Verschmutzungen über die Spalten oder Bohrungen zur Spule gelangen, diese in ihrer Funktion beeinträchtigen und somit die gesamte Daten- und Energieübermittlung behindem oder unterbrechen. Um diese Gefahr zu verringern, ist am Handstück eine Vielzahl von Dichtmittel wie O-Ringe, Klebstoffe, Kunststoffringe etc. vorgesehen, die die Spalten oder die Spule abdichten sollen. Diese Dichtmittel erhöhen und verkomplizieren den Herstellungsaufwand des Handstücks.

Der vorliegenden Erfindung liegt daher die Aufgabe zugrunde ein medizinisches, insbesondere dentales, Handstück zu schaffen, das die oben genannten Nachteile nicht aufweist und das insbesondere die Spule des Handstücks vor Verschmutzung schützt, ohne dass dazu eine Vielzahl zusätzlicher Dichtelemente benötigt werden. Diese Aufgabe wird erfindungsgemäß durch Anspruch 1 gelöst. Die abhängigen Ansprüche definieren Ausführungsbeispiele der vorliegenden Erfindung. Diese Aufgabe wird gemäß einem Ausführungsbeispiel durch ein medizinisches, insbesondere dentales, Handstück gelöst, das umfasst: Eine Außenhülse, eine in der Außenhülse angeordnete und in eine Antriebsbewegung versetzbare Hohlwelle zur Aufnahme eines Behandlungswerkzeugs und eine erste Spule zur induktiven Kopplung, insbesondere zum induktiven Energie- und / oder Datenaustausch, mit einer eine zweite Spule umfassenden Speichereinheit des Behandlungswerkzeugs, wobei die Hohlwelle sich entlang einer Mittelachse erstreckt und eine, bezogen auf die Mittelachse, axiale Ausdehnung und radiale Ausdehnung aufweist, und wobei die erste Spule innerhalb oder außerhalb der axialen Ausdehnung der Hohlwelle und innerhalb der radialen Ausdehnung der Hohlwelle angeordnet ist. Diese Anforderung ist erfüllt, wenn zumindest ein Teil der ersten Spule innerhalb der radialen Ausdehnung der Hohlwelle angeordnet ist, auch wenn andere Teile der Spule gegebenenfalls außerhalb der radialen Ausdehnung der Hohlwelle liegen.

Durch die Anordnung der Spule innerhalb der radialen Ausdehnung der Hohlwelle, insbesondere an dem der Werkzeugaufnahmeöffnung entgegengesetzten Ende der Hohlwelle, ist die Spule durch die Hohlwelle, das in der Hohlwelle aufgenommene Werkzeug und gegebenenfalls durch weitere um die Hohlwelle angeordnete Bauteile derart gut vor während der Behandlung anfallenden Verschmutzungen geschützt, dass am Handstück keine zusätzlichen Dichtmittel für die Spule vorzusehen sind.

Der Begriff Handstück umfasst alle geraden oder pistolenförmigen Handstücke oder Handgriffe, gebogene Handstücke oder Handgriffe, die im Dentalbereich oftmals als Winkelstücke bezeichnet werden, als auch Teile von Handstücken mit einer Hohlwelle zur Aufnahme eines Behandlungswerkzeugs, insbesondere einen Kopfabschnitt eines Handstücks, der zum Beispiel mit davon lösbaren Griffabschnitten verbindbar ist. Unter der Bezeichnung Handstück werden des Weiteren sowohl schnurlose Handstücke verstanden, insbesondere mit einer austauschbaren oder aufladbaren Energiequelle, als auch Handstücke, die eine Versorgungsleitung und eine damit verbundene Steuer-, Regel- und / oder Versorgungseinheit umfassen. Diese Definition des Begriffs Handstück bezieht sich auf alle in diesem Schriftstück beschriebene Ausführungsbeispiele und Textstellen.

Die Hohlwelle ist bevorzugt Teil einer lösbaren, insbesondere kraft- oder formschlüssigen, Werkzeugaufnahme.

Die Speichereinheit des Behandlungswerkzeugs umfasst neben der zweiten Spule bevorzugt einen elektronischen Chip mit einem Mikrocomputer und einem elektronisch programmierbaren Speicher, der entweder als Lesespeicher oder als lesbarer und beschreibbarer Speicher ausgebildet ist. Die induktive Kopplung der beiden als Antennen wirkenden Spulen dient sowohl der Energieversorgung der Speichereinheit als auch dem Datenaustausch. Dies bedeutet, dass die zum Betrieb insbesondere des Mikrocomputers und des Speichers benötigte elektrische Energie vom Handstück, das über elektrische Leitungen mit einer Energiequelle verbunden ist oder eine Energiequelle (Batterie oder Akkumulator) umfasst, über die beiden Spulen auf die Speichereinheit des Behandlungswerkzeugs übertragen wird. Zusätzlich dienen die beiden Spulen auch als Kommunikationsvorrichtungen, insbesondere als Antennen, die uni- oder bidirektional Daten in Form elektrischer Signale übermitteln. Bevorzugt ist der Datenaustausch zwischen den beiden Spulen als modulierte Signalübertragung ausgebildet, insbesondere im Hochfrequenz- oder Radiofrequenzbereich, wobei die Speichereinheit ein RFID-Etikett bestehend aus einem RFID-Chip und einer Spule umfasst.

Das die Speichereinheit umfassende Behandlungswerkzeug ist zum Beispiel als in Rotation versetzbares Werkzeug, bevorzugt zur Bearbeitung von hartem oder weichem Gewebe oder zum Einbringen eines Implantats, insbesondere als rotierbarer Bohrer, oder als in eine Hubbewegung oder als in Schwingung versetzbares Werkzeug ausgebildet. Dem gemäß ist die das Behandlungswerkzeug aufnehmende Hohlwelle drehbar oder hin und her bewegbar oder in Schwingung versetzbar ausgebildet bzw. im Handstück gelagert und sind im Handstück Bauteile, zum Beispiel mechanische Bauteile wie Getriebe oder Schwingungserzeuger vorgesehen, um die benötigte Arbeitsbewegung zur Verfügung zu stellen. Die Werkzeuge umfassen einen Arbeitsabschnitt und einen Schaftabschnitt zur Verbindung des Arbeitsabschnitts mit dem Handstück, wobei die Speichereinheit bevorzugt am Schaftabschnitt, insbesondere zumindest teilweise im Inneren des Schaftabschnitts und / oder an dessen freien Ende angeordnet ist.

Bevorzugt ist die erste Spule an dem der Werkzeughalte-/Lösevorrichtung des Handstücks zugewandten Ende der Hohlwelle oder anschließend an das der Werkzeughalte-/Lösevorrichtung des Handstücks zugewandten Ende der Hohlwelle angeordnet. Besonders bevorzugt ist die erste Spule in einem Hohlraum zwischen dem der Werkzeughalte-/Lösevorrichtung des Handstücks zugewandten Ende der Hohlwelle und einem Teil der Werkzeughalte-/Lösevorrichtung, zum Beispiel dem Betätigungselement, insbesondere einem flach oder gewölbt ausgebildeten Druckdeckel oder einer flach oder gewölbt ausgebildeten Kappe der Werkzeughalte-/Lösevorrichtung, angeordnet. Die erste Spule ist somit besonders weit von der Werkzeugaufnahmeöffnung und damit von der Behandlungsstelle entfemt, wodurch sie vor während der Behandlung anfallenden Verschmutzungen besonders gut geschützt ist.

Durch die unbewegliche Anordnung der ersten Spule in Bezug auf die Hohlwelle wird der Daten- und Energietransfer zu oder von der Spule erheblich vereinfacht.

Gemäß einem Ausführungsbeispiel ist die erste Spule auf einem in Bezug auf die Hohlwelle unbeweglichen, insbesondere flächigen, zum Beispiel platten- oder scheibenförmigen, Träger angeordnet. Dieser Träger ermöglicht eine zuverlässige Befestigung der ersten Spule im Handstück und schützt aufgrund seiner flächigen Form die erste Spule zusätzlich vor Verschmutzungen. Der Träger umfasst bevorzugt ein elektrisch isolierendes Material, zum Beispiel Kunststoff, Glas oder Keramik, mit dem entweder der Träger beschichtet ist oder aus dem der Träger gebildet ist.

Bevorzugt weist der Träger eine Öffnung auf, um die die erste Spule angeordnet ist und die derart bemessen ist, dass sie für die Speichereinheit des Behandlungswerkzeugs zumindest teilweise durchsetzbar ist, so dass die erste Spule und die Speichereinheit des Behandlungswerkzeugs, insbesondere deren Spule, unmittelbar ineinander oder nebeneinander anordenbar sind. Damit wird ein besonders guter und zuverlässiger Daten- und Energietransfer erzielt. Die Öffnung des Trägers und die erste Spule sind insbesondere konzentrisch zur Mittelachse der Hohlwelle angeordnet.

Besonders bevorzugt stützt der Träger zusätzlich zumindest eine Leitung zur Energie- und / oder Datenversorgung, die mit der ersten Spule verbunden ist, wodurch diese zumindest eine Leitung vor mechanischen Belastungen oder Bruch geschützt ist.

Gemäß einem bevorzugten Ausführungsbeispiel weist der Träger eine der Werkzeugaufnahmeöffnung des Handstücks zugewandte Seite und eine von der Werkzeugaufnahmeöffnung des Handstücks abgewandte Seite auf, wobei zu beiden Seiten des Trägers Teile der Werkzeughalte-/Lösevorrichtung angeordnet sind. Besonders bevorzugt sind die erste Spule und / oder der Träger von zumindest einem Teil der Werkzeughalte-/Lösevorrichtung umgreifbar oder umgriffen oder durchsetzt oder durchsetzbar, wobei der Träger insbesondere eine Ausnehmung zum Umgreifen oder Durchsetzen des zumindest einen Teils der Werkzeughalte-/Lösevorrichtung aufweist. Bevorzugt werden die erste Spule und / oder der Träger durch den beweglichen Druckdeckel oder durch ein mit dem beweglichen Druckdeckel verbundenes Bauteil umgriffen oder durchsetzt. Damit kann eine besonders Platz sparende Integration des Trägers und der ersten Spule in das Handstück bzw. in den Handstückkopf erreicht werden, so dass die Abmessungen des Handstückkopfs, insbesondere seine, bezogen auf die Mittelachse der Hohlwelle, axiale Höhe, möglichst gering sind.

Um einen besonders guten und störungsfreien Energie- und Datentransfer zu ermöglichen, ist gemäß einem bevorzugten Ausführungsbeispiel die erste Spule von einer elektrischen Isolierschicht umgeben, die insbesondere zumindest einen Luftspalt um die erste Spule, ein elektrisch nicht leitendes oder elektrisch isolierendes Material umfassendes Betätigungselement oder einen elektrisch nicht leitendes oder elektrisch isolierendes Material umfassenden Träger aufweist. Das Betätigungselement oder der Träger können dabei vollständig aus dem elektrisch nicht leitenden oder elektrisch isolierenden Material, zum Beispiel aus Keramik, Glas oder Kunststoff, bestehen, oder sie können damit beschichtet oder davon umhüllt sein.

Zum Halten und Lösen des Behandlungswerkzeugs in der Hohlwelle des medizinischen, insbesondere dentalen, Handstücks ist dieses mit einer Werkzeughalte-/Lösevorrichtung versehen. Grundsätzlich kann jede beliebige Werkzeughalte-/Lösevorrichtung für das erfindungsgemäße Handstück verwendet werden, solange diese Werkzeughalte-/Lösevorrichtung der Anordnung der ersten Spule innerhalb oder außerhalb der axialen Ausdehnung der Hohlwelle und innerhalb der radialen Ausdehnung der Hohlwelle nicht entgegen steht. Gemäß einem bevorzugten Ausführungsbeispiel umfasst das Handstück jedoch eine im Folgenden detailliert beschriebene Werkzeughalte-/Lösevorrichtung, die die Integration der ersten Spule in das Handstück und die Funktion der ersten Spule oder der gesamten Daten- und Energietransfereinheit, die neben der ersten Spule auch die Speichereinheit des Behandlungswerkzeugs umfasst, besonders begünstigt.

Des Weiteren wird ausdrücklich darauf verwiesen, dass diese bevorzugte Werkzeughalte-/Lösevorrichtung selbstverständlich auch in einem Handstück implementierbar ist, das keine erste Spule aufweist oder das nicht zur Aufnahme eines Behandlungswerkzeugs mit einer Speichereinheit ausgebildet oder geeignet ist oder das nicht zu einem Daten- und Energietransfer, insbesondere einem induktiven Daten- und Energietransfer, wie er in dem vorliegenden Schriftstück beschrieben ist, ausgebildet oder geeignet ist. In anderen Worten stellt die im Weiteren beschriebene bevorzugte Werkzeughalte-/Lösevorrichtung auch einen eigenen, von Handstücken mit Datentransfer unabhängigen erfinderischen Aspekt dar. Die bevorzugte Werkzeughalte-/Lösevorrichtung kann somit Teil jedes beliebigen medizinischen, insbesondere dentalen, Handstücks sein.

Die bevorzugte Werkzeughalte-/Lösevorrichtung umfasst zumindest ein eine Bohrung der Hohlwelle durchsetzendes und durch die Bohrung in die Hohlwelle ragendes Formelement, eine beweglich angeordnete, mit dem Formelement zusammenwirkende Verriegelungshülse und ein Betätigungselement zum Bewegen der Verriegelungshülse. Gemäß einem Ausführungsbeispiel ist die Verriegelungshülse mit einem Wälzlager zur Lagerung der Hohlwelle verbunden oder als integraler Teil des Innenlaufrings dieses Wälzlagers ausgebildet, wobei des Weiteren das Wälzlager zum Bewegen der Verriegelungshülse verschiebbar im Handstück angeordnet ist. Das Betätigungselement der Werkzeughalte-/Lösevorrichtung ist gemäß diesem Ausführungsbeispiel derart ausgebildet, dass es zum Bewegen der Verriegelungshülse an dem Wälzlager, insbesondere an dessen äußeren Laufring, angreift oder das Wälzlager, insbesondere dessen äußeren Laufring, kontaktiert. Ein Vorteil dieser Werkzeughalte-/Lösevorrichtung ist ihre äußerst geringe, Platz sparende Ausdehnung, insbesondere ihre geringe axiale Ausdehnung (bezogen auf die Mittelachse der das Behandlungswerkzeug aufnehmenden Hohlwelle). Ein anderer Vorteil dieser Werkzeughalte-/Lösevorrichtung besteht darin, dass das Betätigungselement keinen rotierenden Teil der Werkzeughalte-/Lösevorrichtung berührt, weder während des Betriebs des Handstücks noch während des Einspann- oder Lösevorgangs des Werkzeugs, so dass eine Erwärmung des Betätigungselements vermieden wird.

Ein weiterer Vorteil dieser Werkzeughalte-/Lösevorrichtung besteht darin, dass ein Kontaktbereich zwischen dem Betätigungselement und weiteren Bauteilen der Werkzeughalte-/Lösevorrichtung im Handstückkopf radial außen (in Bezug auf die Mittelachse der das Behandlungswerkzeug aufnehmenden Hohlwelle) angeordnet ist. Gemäß einem bevorzugten Ausführungsbeispiel wird der zum Lösen des Behandlungswerkzeugs aus der Werkzeughalte-/Lösevorrichtung notwendige Kontaktbereich durch den Druckdeckel, insbesondere durch zumindest ein am peripheren Bereich des Druckdeckels vorgesehenes Kontaktelement, und durch das Wälzlager zur Lagerung der Hohlwelle, insbesondere durch dessen Außenring, gebildet. Dadurch wird innerhalb bzw. unterhalb des Betätigungselements oder Druckdeckels, insbesondere in ihrem zentralen Bereich, ein Hohlraum zur Aufnahme von Bauteilen geschaffen, insbesondere zur Aufnahme einer im Vorhergehenden und im Folgenden beschriebenen Speichereinheit oder einer Spule zum Energie- und / oder Datentransfer.

Ein wesentliches Merkmal der Werkzeughalte-/Lösevorrichtung ist somit das Betätigungselement, das eine Kappe und zumindest ein Kontaktelement umfasst. Das zumindest eine Kontaktelement ist gemäß einem Ausführungsbeispiel am unmittelbaren Außenrand der Kappe oder im peripheren Bereich der Kappe des Betätigungselements, insbesondere radial beabstandet von der Verriegelungshülse, angeordnet oder daran befestigt oder es entspringt daraus. Gemäß einem anderen Ausführungsbeispiel ist der Innendurchmesser des ringförmigen Kontaktelements oder die lichte Weite des Kontaktelements größer als der Außendurchmesser der Verriegelungshülse. Um das Werkzeug aus der Werkzeughalte-/Lösevorrichtung zu lösen und / oder es in der Werkzeughalte-/Lösevorrichtung zu fixieren, wirkt das zumindest eine Kontaktelement mit der Verriegelungshülse zusammen, wobei das zumindest eine Kontaktelement entweder direkt oder indirekt über weitere Bauteile, zum Beispiel ein Wälzlager zur Lagerung der Hohlwelle der Werkzeughalte-/Lösevorrichtung, mit der Verriegelungshülse verbunden ist. Diese genannten Merkmale und Ausführungsbeispiel tragen dazu bei, dass innerhalb bzw. unterhalb des Betätigungselements oder Druckdeckels, insbesondere in ihrem zentralen Bereich, ein Hohlraum zur Aufnahme von Bauteilen entsteht, insbesondere zur Aufnahme der oben genannten Spule oder Speichereinheit.

Gemäß einem Ausführungsbeispiel umfasst die Werkzeughalte-/Lösevorrichtung einen Käfig, in dem das Wälzlager verschiebbar aufgenommen ist und in dem bevorzugt ein das Wälzlager vorspannendes Federelement aufgenommen ist. Bevorzugt ist am Käfig, insbesondere als integraler Bestandteil einer Käfigwand, zumindest ein Federelement, insbesondere ein Federarm, vorgesehen, der das Betätigungselement vorspannt. Damit ist in vorteilhafter Weise eine besonders kompakte und einfach zu verbauende, patronenartige Einheit geschaffen.

Ein weiteres vorteilhaftes Merkmal der Werkzeughalte-/Lösevorrichtung besteht darin, dass sowohl die axiale Fixierung des Behandlungswerkzeugs in der Werkzeughalte-/Lösevorrichtung als auch die Drehmomentübertragung auf das Behandlungswerkzeug durch eine einzige oder gemeinsame Halte- und Übertragungseinheit erfolgt. Die Halte- und Übertragungseinheit umfasst insbesondere das zumindest eine in die Hohlwelle ragende Formelement, insbesondere ein kugelig ausgebildetes Formelement. Damit ist es möglich, die Hohlwelle über ihre gesamte Länge als Hohlwelle mit einer zylindrischen Innenbohrung mit konstantem Innendurchmesser oder mit einer durchgehenden zylindrischen Innenwand auszubilden, die nur durch die zumindest eine Öffnung für das Formelement durchbrochen ist. Dem gemäß ist auch der Aufbau des Werkzeugschafts, insbesondere jenes Abschnitts des Werkzeugschafts, der in der Hohlwelle aufgenommen ist, mit Ausnahme der Ringnut zur Aufnahme des Formelements durchgehend zylindrisch und weist einen konstanten Außendurchmesser auf. Die Hohlwelle bildet somit eine durchgehende zylindrische Führung oder Werkzeuglagerung oder einen durchgehenden zylindrischen Werkzeugsitz für das Behandlungswerkzeug.

Ein weiterer erfinderischer Aspekt bezieht sich auf ein medizinisches, insbesondere dentales, Handstück mit einer Speichereinheit zur Speicherung von Betriebs- und / oder Identifikationsdaten des Handstücks, auf eine medizinische, insbesondere dentale, Behandlungseinrichtung mit einem derartigen Handstück und ein Verfahren zur Übertragung von Energie und / oder Betriebs- und / oder Identifikationsdaten mit einem derartigen Handstück oder einer derartigen Behandlungseinrichtung. Dieses Handstück stellt insbesondere auch einen eigenen, unabhängigen erfinderischen Aspekt dar: Dies bedeutet, dass dieses Handstück gemäß einem bevorzugten Ausführungsbeispiel eine induktive Daten- und Energietransfereinheit zum Energie- und / oder Datenaustausch mit einer Speichereinheit eines Behandlungswerkzeugs aufweist, insbesondere dass es mit einer induktive Daten- und Energietransfereinheit zum Energie- und / oder Datenaustausch mit einer Speichereinheit eines Behandlungswerkzeugs ausgestattet ist, wie sie in diesem Schriftstück beschrieben ist. Gemäß einem alternativen Ausführungsbeispiel hat dieses Handstück jedoch auch keine Daten- und Energietransfereinheit zum Energie- und / oder Datenaustausch mit einer Speichereinheit eines Behandlungswerkzeugs. Des Weiteren weist dieses Handstück gemäß einem Ausführungsbeispiel eine Werkzeughalte-/Lösevorrichtung auf, wie sie in diesem Schriftstück beschrieben ist, alternativ hat es eine andere, beliebige Werkzeughalte-/Lösevorrichtung.

Die Speichereinheit des Handstücks weist insbesondere ein Speicherelement zur Speicherung von Betriebs- und / oder Identifikationsdaten des Handstücks, eine mit dem Speicherelement verbundene, am Handstück vorgesehene erste Spule und bevorzugt eine mit dem Speicherelement verbundene Lese- und/ oder Schreibvorrichtung zum Auslesen von und/ oder Beschreiben des Speicherelements mit Betriebs- und / oder Identifikationsdaten auf, so dass die Versorgungsenergie für die Speichereinheit und / oder die Betriebs- und / oder Identifikationsdaten wahlweise induktiv über die am Handstück vorgesehene erste Spule oder leitungsgebunden über zumindest eine, die Speichereinheit mit der Kupplungsvorrichtung verbindende optische oder elektrische Leitung übertragbar sind. Insbesondere die Datenübertragung kann entweder uni- oder bidirektional erfolgen.

Der Vorteil dieses Handstücks besteht unter anderem darin, dass durch die wahlweise induktive oder leitungsgebundene Energie- und / oder Datenübertragung die Möglichkeit geschaffen wird, Energie oder Daten auf das Handstück zu übertragen oder vom Handstück zu empfangen, unabhängig davon, ob das Handstück mit der Energiequelle oder dem Datensender oder -empfänger mechanisch verbindbar ist oder nicht. So kann zum Beispiel das Handstück zur Reinigung in ein Reinigungsgerät, insbesondere einen Desinfektor oder Sterilisator, gelegt werden, ohne dass es mit dem Reinigungsgerät mechanisch gekuppelt wird. Zum Nachweis der Reinigung wird auf dem Speicherelement induktiv eine Information gespeichert, zum Beispiel dass das Handstück gereinigt wurde oder welcher Art der Reinigung es unterzogen wurde oder wie oft es in Summe gereinigt wurde. Dazu weist das Reinigungsgerät eine entsprechende induktive Sendeeinheit auf, die mit einer Energiequelle, einer Antenne, die insbesondere als Spule ausgebildet ist, und einer Datenquelle versehen oder damit verbunden ist, so dass Energie und Daten in Form elektrischer Signale vom Reinigungsgerät auf das Handstück übermittelt werden können. Bevorzugt ist die Energie- und / oder Datenübertragung zwischen den beiden Spulen als hochfrequente Signalübertragung ausgebildet, insbesondere im Radiofrequenzbereich, wobei die Speichereinheit einen RFID-Chip oder ein RFID-Etikett umfasst. Wird das Handstück nach der Reinigung mittels einer mechanischen Kupplung, zum Beispiel einer Steckkupplung oder einer Steck-Drehkupplung, an eine Steuer- und / oder Versorgungseinheit angeschlossen, die entsprechende Leitungen für die Energie- und / oder Datenübertragung umfasst, so werden die auf dem Speicherelement abgelegten Daten des Reinigungsgeräts durch eine Steuerschaltung oder einen Mikroprozessor der Steuer- und / oder Versorgungseinheit leitungsgebunden ausgelesen. Gemäß einem bevorzugten Ausführungsbeispiel setzt die Steuer- und / oder Versorgungseinheit das Handstück nur in Betrieb, wenn die Daten aus dem Speicherelement des Handstücks anzeigen, dass das Handstück gereinigt wurde.

Weist die Steuer- und / oder Versorgungseinheit keine Leitungen oder Kontakte auf, um auf die Daten der Speichereinheit leitungsgebunden zugreifen zu können oder die Speichereinheit mit Energie versorgen zu können, so können diese Daten gemäß einem alternativen Ausführungsbeispiel über ein separates Lese- und / oder Sendegerät von der Speichereinheit ausgelesen werden. Das Lese- und / oder Sendegerät ist über Leitungen mit der Steuer- und / oder Versorgungseinheit verbunden und leitet zum Beispiel die ausgelesenen Daten zur Verarbeitung oder zum Betrieb des Handstücks an die Steuer- und / oder Versorgungseinheit weiter. Das Lese- und / oder Sendegerät ist zwecks Energie- und / oder Datenübertragung induktiv mit der Speichereinheit des Handstücks koppelbar und ist mit einer Energiequelle, einer Antenne, die insbesondere als Spule ausgebildet ist, und einer Lese- und / oder Sendeeinheit versehen oder damit verbunden.

Aus der obigen Beschreibung wird ersichtlich, dass die Energie- und / oder Datenübertragung zwischen der Speichereinheit des Handstücks und der Steuer- und / oder Versorgungseinheit wahlweise induktiv erfolgen kann, insbesondere über ein Lese- und / oder Sendegerät, das integraler Teil der Steuer- und / oder Versorgungseinheit ist oder eine separate Baueinheit ist, die über Leitungen mit der Steuer- und / oder Versorgungseinheit verbunden ist, oder dass die Energie und / oder Daten leitungsgebunden, gegebenenfalls über Zwischenstücke wie einen Motor, eine Kupplung, einen Adapter etc., übertragbar sind. Damit ist in vorteilhafter Weise ein universelles Handstück geschaffen, das Daten und / oder Energie sowohl mit einer neuen Steuer- und / oder Versorgungseinheit austauschen kann, die mit entsprechenden Leitungen für die leitungsgebundene Energie- und / oder Datenübertragung versehen ist, als auch mit einer älteren Steuer- und / oder Versorgungseinheit, die derartige Leitungen nicht aufweist, die jedoch mit einem Lese- und / oder Sendegerät verbunden ist, das induktiv mit dem Handstück koppelbar ist. Selbstverständlich ist es auch möglich, die Energie- und / oder Datenübertragung zwischen dem Handstück und dem Lese- und / oder Sendegerät leitungsgebunden durchzuführen.

Die Speichereinheit des Handstücks umfasst neben der als Antenne wirkenden Spule einen elektronisch programmierbaren Speicher, der entweder als Lesespeicher oder als lesbarer und beschreibbarer Speicher ausgebildet ist, und einen Chip oder Mikrocomputer, der auch die Lese- und/ oder Schreibvorrichtung zum Auslesen von und/ oder Beschreiben des Speicherelements mit Betriebs- und / oder Identifikationsdaten bildet. Bevorzugt ist die induktive Datenübertragung als hochfrequente Signalübertragung ausgebildet, insbesondere im Radiofrequenzbereich, wobei die Speichereinheit des Handstücks einen RFID-Chip oder ein RFID-Etikett umfasst.

Gemäß einem Ausführungsbeispiel verbindet die zumindest eine optische oder elektrische Leitung des Handstücks die Speichereinheit mit der Kupplungsvorrichtung und endet in zumindest einem Kontakt an der Kupplungsvorrichtung, so dass die Versorgungsenergie und / oder die Betriebs- und / oder Identifikationsdaten über die Kupplungsvorrichtung zwischen der Speichereinheit und der Steuer- und / oder Versorgungseinheit übertragbar sind. Die Kupplungsvorrichtung ist zum Beispiel als Teil einer Steck-, Schraub-, Dreh- oder Steck-Drehkupplung ausgebildet, die entsprechende Gegenkupplungselemente aufweist. Die zumindest eine optische oder elektrische Leitung oder der zumindest eine Kontakt enden entweder direkt an der Außenhülse oder der außen gelegenen Stirnfläche der Kupplungsvorrichtung oder sie liegen geschützt in einer Aufnahme oder einem Rücksprung, insbesondere in einem Kupplungsrohr, in die eine Leitung, ein Kontakt oder ein Teil des Gegenkupplungselements eingreift.

Gemäß einem Ausführungsbeispiel ist die gesamte Speichereinheit auf einem einzigen Trägerelement, insbesondere einer Platine, angeordnet. Damit kann ein besonders guter Schutz der Speichereinheit vor Verschmutzungen und Feuchtigkeit erzielt werden, da die gesamte Speichereinheit sowie die die einzelnen Bauteile der Speichereinheit verbindenden Leitungen durch eine gemeinsame Schutzvorrichtung umhüllbar sind, zum Beispiel ein Gehäuse aus Metall oder Kunststoff, eine Beschichtung mit Lack oder ein Vergussmaterial. Gemäß einem alternativen Ausführungsbeispiel sind ein oder mehrere Teile der Speichereinheit, insbesondere die am Handstück vorgesehene erste Spule und das Speicherelement, auf unterschiedlichen Trägerelementen angeordnet, die über elektrische Leitungen miteinander verbunden sind. Damit können spezifische Anforderungen der jeweiligen Teile der Speichereinheit besonders gut berücksichtigt werden, zum Beispiel dass die erste Spule an einer Position im Handstück angeordnet ist, an der eine möglichst störungsfreie induktive Energie- und / oder Datenübertragung möglich ist, zum Beispiel direkt an oder direkt unterhalb der Außenhülse oder im Kopfteil des Handstücks.

Um eine besonders guten und störungsfreien Energie- und Datentransfer zu ermöglichen, umfasst gemäß einem bevorzugten Ausführungsbeispiel zumindest ein Abschnitt der Außenhülse, insbesondere jener Abschnitt der Außenhülse, der die am Handstück vorgesehene erste Spule umgibt, ein magnetisch nicht leitendes und elektrisch nicht leitendes Material, insbesondere Kunststoff, Glas oder Keramik. Dieser Abschnitt der Außenhülse ist zum Beispiel durch den Druckdeckel der Werkzeuglösevorrichtung des Handstücks oder durch einen zylinder- oder kreisbogenförmigen Teil des Halsabschnitts des Handstücks gebildet.

Gemäß einem Ausführungsbeispiel weist das Handstück einen die Anschlussvorrichtung für das Behandlungswerkzeug aufnehmenden Kopfabschnitt, einen an den Kopfabschnitt anschließenden Halsabschnitt und einen an den Halsabschnitt anschließenden, bevorzugt gewinkelt zum Halsabschnitt angeordneten, Griffabschnitt auf, wobei die am Handstück vorgesehene erste Spule im Kopfabschnitt oder im Halsabschnitt angeordnet ist. Damit wird eine insbesondere für die induktive Energie- und / oder Datenübertragung vorteilhafte Handhabung des Handstücks erreicht, da der Anwender das Handstück derart in die Hand nehmen kann, wie er es weiterer Folge für die Behandlung hält, so dass zur zwischen der induktive Energie- und / oder Datenübertragung und dem Beginn der Verwendung des Handstücks kein Umgreifen durch den Anwender nötig ist.

Gemäß einem bevorzugten Ausführungsbeispiel ist das Handstück Teil einer induktiven Energie- und Datentransfereinheit zur Übermittlung von Energie und Daten zwischen einer Steuer- und / oder Versorgungseinheit, dem Handstück und zumindest einem durch das Handstück antreibbaren Behandlungswerkzeug. Hierbei erfolgt ein Energie- und / oder Datentransfer nicht nur zwischen dem Handstück und der Steuer- und / oder Versorgungseinheit, sondern auch zwischen dem Behandlungswerkzeug und der Steuer- und / oder Versorgungseinheit, wobei bevorzugt zumindest ein Teil des Energie- und / oder Datentransfers zwischen dem Behandlungswerkzeug und der Steuer- und / oder Versorgungseinheit über oder durch das Handstück abläuft.

Gemäß einem Ausführungsbeispiel ist dafür eine zweite Spule am Handstück vorgesehen, die derart im Kopfabschnitt des Handstücks, insbesondere an der Anschlussvorrichtung für das Behandlungswerkzeug, angeordnet ist, dass sie zur Energie- und / oder Datenübertragung induktiv mit einer Spule einer Speichereinheit des Behandlungswerkzeugs koppelbar. Diese zweite Spule versorgt somit eine Speichereinheit des Behandlungswerkzeugs induktiv mit Energie und überträgt induktiv Daten von der oder auf die Speichereinheit des Behandlungswerkzeugs. Die Speichereinheit des Behandlungswerkzeugs umfasst eine Spule, bevorzugt einen elektronischen Chip mit einem Mikrocomputer und einen elektronisch programmierbaren Speicher, der entweder als Lesespeicher oder als lesbarer und beschreibbarer Speicher ausgebildet ist. Bevorzugt weist diese induktive Energie- und / oder Datenübertragung den gleichen Aufbau, die gleiche Anordnung, die gleichen Merkmale und / oder die gleiche Funktionsweise auf, wie sie für eine induktive Energie- und / oder Datenübertragung zwischen einer Speichereinheit eines Behandlungswerkzeugs und einer Spule in einem Handstück in diesem Schriftstück beschrieben sind.

Der Energie- und / oder Datentransfer von oder zur im Handstück vorgesehenen zweiten Spule erfolgt leitungsgebunden, wobei die zweite Spule dazu entweder direkt über zumindest eine optische oder elektrische Leitung oder über die Speichereinheit zur Speicherung von Betriebs- und / oder Identifikationsdaten des Handstücks und zumindest eine optische oder elektrische Leitung mit der Kupplungsvorrichtung verbunden ist. Werden die Daten des Behandlungswerkzeugs über die Speichereinheit zur Speicherung von Betriebs- und / oder Identifikationsdaten des Handstücks übertragen, so dient diese Speichereinheit bevorzugt als ein Zwischenspeicher für die Daten des Behandlungswerkzeugs. Alternativ wird die Versorgungsenergie für die Speichereinheit des Behandlungswerkzeugs induktiv direkt zwischen einer externen, mit einer Energiequelle verbundenen Spule und der Spule der Speichereinheit des Behandlungswerkzeugs übertragen.

Gemäß einem alternativen, bevorzugten Ausführungsbeispiel der induktiven Energie- und Datentransfereinheit zur Übermittlung von Energie und Daten zwischen einer Steuer- und / oder Versorgungseinheit, dem Handstück und zumindest einem durch das Handstück antreibbaren Behandlungswerkzeug ist die am Handstück vorgesehene erste Spule derart an der Anschlussvorrichtung für das Behandlungswerkzeug angeordnet, dass sie zur Energie- und / oder Datenübertragung induktiv mit einer Spule einer Speichereinheit des Behandlungswerkzeugs koppelbar ist. In anderen Worten ist am Handstück damit nur eine Spule vorgesehen, über die der Energie- und / oder Datentransfer zwischen der Speichereinheit des Werkzeugs und der Steuer- und / oder Versorgungseinheit und über die der Energie- und / oder Datentransfer zwischen der Speichereinheit des Handstücks und der Steuer- und / oder Versorgungseinheit erfolgt. Somit entfällt in vorteilhafter Weise die am Handstück vorgesehene zweite Spule und alle mit der zweiten Spule zusammenwirkenden Bauteile zur Energie- und / oder Datenübertragung.

Diese am Handstück vorgesehene erste Spule ist wie im Vorhergehenden schon beschrieben mit dem Speicherelement der Speichereinheit zur Speicherung von Betriebs- und / oder Identifikationsdaten des Handstücks verbunden, so dass induktiv Energie und / oder Daten zwischen der Speichereinheit des Handstücks und einem Lese- und / oder Sendegerät übertragbar sind. Die erste Spule und das Speicherelement sind dabei entweder auf einem gemeinsamen Trägerelement oder einander benachbart angeordnet oder sie sind voneinander beabstandet im Handstück angeordnet und durch elektrische Leitungen miteinander verbunden.

Die am Handstück vorgesehene erste Spule dient gemäß diesem alternativen Ausführungsbeispiel zumindest auch der induktiven Datenübertragung zwischen der Speichereinheit des Behandlungswerkzeugs und der Steuer- und / oder Versorgungseinheit. Bevorzugt werden dabei die Daten des Behandlungswerkzeugs über die erste Spule auf die Speichereinheit zur Speicherung von Betriebs- und / oder Identifikationsdaten des Handstücks übertragen und dort zwischengespeichert, so dass die Speichereinheit des Handstücks einen Zwischenspeicher für die Daten des Behandlungswerkzeugs bildet. Anschließend werden die Daten des Behandlungswerkzeugs vom Zwischenspeicher über die erste Spule induktiv auf ein Lese- und / oder Sendegerät übertragen oder die Daten induktiv vom Zwischenspeicher über die erste Spule auf die Speichereinheit des Behandlungswerkzeugs übertragen. Selbstverständlich ist es auch möglich die Daten des Behandlungswerkzeugs leitungsgebunden zwischen dem Zwischenspeicher und der Kupplungsvorrichtung zu übertragen.

Die Energieversorgung der Speichereinheit des Behandlungswerkzeugs erfolgt entweder über eine direkte induktive Kopplung zwischen der Spule des Lese- und / oder Sendegerät und der Spule der Speichereinheit des Behandlungswerkzeugs oder leitungsgebunden ebenfalls über die am Handstück vorgesehene erste Spule, die dazu direkt oder über die Speichereinheit des Handstücks mit einer Energiequelle verbindbar oder verbunden ist. Bevorzugt werden die Speichereinheit des Handstücks und die erste Spule über gemeinsame elektrische Leitungen mit Energie versorgt.

Die Anschlussvorrichtung weist bevorzugt eine lösbare, insbesondere kraft- oder formschlüssige, Werkzeugaufnahme auf, in die das Behandlungswerkzeug über eine Werkzeugaufnahmeöffnung einführbar ist. Die Anschlussvorrichtung steht mit einer Antriebseinheit in Verbindung, die zum Beispiel eine oder mehrere Wellen, Zahnräder, Getriebe, einen Luft- oder Elektromotor, ein fluidbetriebenes Laufrad und / oder Fluidleitungen umfasst.

Um eine qualitativ hochwertige und möglichst störungsfreie Energie- und / oder Datenübertragung zu erreichen, umgeben gemäß einem Ausführungsbeispiel die am Handstück vorgesehene erste Spule oder die am Handstück vorgesehene zweite Spule die Anschlussvorrichtung für das Behandlungswerkzeug zumindest teilweise oder sind sie anschließend an das der Werkzeugaufnahmeöffnung abgewandte Ende der Anschlussvorrichtung angeordnet. Aus demselben Grund sind gemäß einem anderen Ausführungsbeispiel die erste Spule oder zweite Spule von einer elektrischen Isolierschicht umgeben, die insbesondere zumindest einen Luftspalt um die erste oder zweite Spule, ein elektrisch nicht leitendes Material umfassendes Betätigungselement der Werkzeuglösevorrichtung oder ein elektrisch nicht leitendes Material umfassendes Trägerelement aufweist.

Um das Risiko der Verschmutzung der am Handstück vorgesehenen ersten Spule oder der am Handstück vorgesehenen zweiten Spule durch in das Handstück eindringende Partikel möglichst gering zu halten, sind gemäß einem weiteren Ausführungsbeispiel die erste Spule oder zweite Spule innerhalb oder außerhalb der axialen Ausdehnung der Anschlussvorrichtung und innerhalb der radialen Ausdehnung der Anschlussvorrichtung angeordnet. Insbesondere sind die erste Spule oder die zweite Spule in einem Hohlraum zwischen dem der Werkzeugaufnahmeöffnung abgewandten Ende der Anschlussvorrichtung und einem Betätigungselement der Werkzeuglösevorrichtung, insbesondere dem Druckdeckel, angeordnet.

Die medizinische, insbesondere dentale, Behandlungseinrichtung umfasst ein im Vorherstehenden beschriebenes medizinisches, insbesondere dentales, Handstück und ein Lese- und / oder Sendegerät mit einer am Lese- und / oder Sendegerät vorgesehenen Spule, die zur Energie- und / oder Datenübertragung induktiv mit der am Handstück vorgesehenen ersten Spule und / oder mit der am Handstück vorgesehene zweite Spule und / oder mit einer Spule einer Speichereinheit des Behandlungswerkzeugs koppelbar ist. Das Lese- und / oder Sendegerät ist bevorzugt mit der Steuer- und / oder Versorgungseinheit operativ verbunden oder als integraler Teil der Steuer- und / oder Versorgungseinheit ausgebildet.

Bei einem Verfahren zur Übertragung von Energie und / oder Betriebs- und / oder Identifikationsdaten mit einem im Vorherstehenden beschriebenen medizinischen, insbesondere dentalen, Handstück oder mit einer im Vorherstehenden beschriebenen medizinischen, insbesondere dentalen, Behandlungseinrichtung erfolgt die Übertragung der Energie und / oder Betriebs- und / oder Identifikationsdaten wahlweise induktiv über die am Handstück vorgesehene erste Spule oder leitungsgebunden über zumindest eine mit der Speichereinheit verbundene optische oder elektrische Leitung. Bevorzugt sind die am Handstück vorgesehene erste Spule oder die am Handstück vorgesehene zweite Spule derart an der Anschlussvorrichtung für das Behandlungswerkzeug angeordnet, dass eine induktive Energie- und / oder Datenübertragung mit der Spule der Speichereinheit des Behandlungswerkzeugs erfolgt.

Das medizinische, insbesondere dentale, Handstück, die medizinische, insbesondere dentale, Behandlungseinrichtung und das Verfahren zur Übertragung von Energie und / oder Betriebs- und / oder Identifikationsdaten sind insbesondere durch folgende Merkmale gekennzeichnet:
1. Medizinisches, insbesondere dentales, Handstück umfassend eine Außenhülse, eine in der Außenhülse angeordnete und in eine Antriebsbewegung versetzbare Anschlussvorrichtung zum Anschluss eines Behandlungswerkzeugs, eine Kupplungsvorrichtung zur Verbindung des Handstücks mit einer Steuer- und / oder Versorgungseinheit und eine Speichereinheit, die über zumindest eine optische oder elektrische Leitung mit der Kupplungsvorrichtung verbunden ist, wobei die Speichereinheit ein Speicherelement zur Speicherung von Betriebs- und / oder Identifikationsdaten des Handstücks, eine mit dem Speicherelement verbundene, am Handstück vorgesehene erste Spule und bevorzugt eine mit dem Speicherelement verbundene Lese- und/ oder Schreibvorrichtung zum Auslesen von und/ oder Beschreiben des Speicherelements mit Betriebs- und / oder Identifikationsdaten umfasst, so dass die Versorgungsenergie für die Speichereinheit und / oder die Betriebs- und / oder Identifikationsdaten wahlweise induktiv über die am Handstück vorgesehene erste Spule oder leitungsgebunden über die zumindest eine optische oder elektrische Leitung übertragbar sind.
2. Medizinisches, insbesondere dentales, Handstück nach Punkt 1, wobei die zumindest eine optische oder elektrische Leitung oder zumindest ein Kontakt der zumindest einen optische oder elektrische Leitung in einer Stirnfläche der Kupplungsvorrichtung oder in einem Kupplungsrohr der Kupplungsvorrichtung enden.
3. Medizinisches, insbesondere dentales, Handstück nach Punkt 1 oder 2, wobei die gesamte Speichereinheit auf einem einzigen Trägerelement, insbesondere einer Platine, angeordnet ist oder wobei ein oder mehrere Teile der Speichereinheit, insbesondere die am Handstück vorgesehene erste Spule und das Speicherelement, auf unterschiedlichen Trägerelementen angeordnet sind, die über elektrische Leitungen miteinander verbunden sind.
4. Medizinisches, insbesondere dentales, Handstück nach einem der vorhergehenden Punkte, wobei
   zumindest ein Abschnitt der Außenhülse, insbesondere jener Abschnitt der Außenhülse, der die am Handstück vorgesehene erste Spule umgibt, ein magnetisch nicht leitendes und elektrisch nicht leitendes Material, insbesondere Kunststoff, Glas oder Keramik, umfasst.
5. Medizinisches, insbesondere dentales, Handstück nach einem der vorhergehenden Punkte, wobei
   das Handstück einen die Anschlussvorrichtung für das Behandlungswerkzeug aufnehmenden Kopfabschnitt, einen an den Kopfabschnitt anschließenden Halsabschnitt und einen an den Halsabschnitt anschließenden, bevorzugt gewinkelt zum Halsabschnitt angeordneten, Griffabschnitt aufweist, wobei die am Handstück vorgesehene erste Spule im Kopfabschnitt oder im Halsabschnitt angeordnet ist.
6. Medizinisches, insbesondere dentales, Handstück nach einem der vorhergehenden Punkte, wobei
   die am Handstück vorgesehene erste Spule derart an der Anschlussvorrichtung für das Behandlungswerkzeug angeordnet ist, dass sie zur Energie- und / oder Datenübertragung induktiv mit einer Spule einer Speichereinheit des Behandlungswerkzeugs koppelbar ist.
7. Medizinisches, insbesondere dentales, Handstück nach einem der Punkte 1 - 5, umfassend
   eine zweite, am Handstück vorgesehene Spule, die derart an der Anschlussvorrichtung für das Behandlungswerkzeug angeordnet ist, dass sie zur Energie- und / oder Datenübertragung induktiv mit einer Spule einer Speichereinheit des Behandlungswerkzeugs koppelbar ist.
8. Medizinisches, insbesondere dentales, Handstück nach einem der Punkte 6 oder 7, wobei
   die am Handstück vorgesehene erste Spule oder die am Handstück vorgesehene zweite Spule die Anschlussvorrichtung für das Behandlungswerkzeug zumindest teilweise umgibt oder anschließend an das der Werkzeugaufnahmeöffnung abgewandte Ende der Anschlussvorrichtung angeordnet ist.
9. Medizinisches, insbesondere dentales, Handstück nach einem der Punkte 6 - 8, wobei
   die Anschlussvorrichtung sich entlang einer Mittelachse erstreckt und eine, bezogen auf die Mittelachse, axiale Ausdehnung und radiale Ausdehnung aufweist und wobei die am Handstück vorgesehene erste Spule oder die am Handstück vorgesehene zweite Spule innerhalb oder außerhalb der axialen Ausdehnung der Anschlussvorrichtung und innerhalb der radialen Ausdehnung der Anschlussvorrichtung angeordnet ist.
10. Medizinisches, insbesondere dentales, Handstück nach einem der Punkte 6 - 9, wobei
   die am Handstück vorgesehene erste Spule oder die am Handstück vorgesehene zweite Spule in einem Hohlraum zwischen dem der Werkzeugaufnahmeöffnung abgewandten Ende der Anschlussvorrichtung und einem Betätigungselement der Werkzeuglösevorrichtung, insbesondere dem Druckdeckel, angeordnet ist.
11. Medizinisches, insbesondere dentales, Handstück nach einem der vorhergehenden Punkte, wobei
   die am Handstück vorgesehene erste Spule oder die am Handstück vorgesehene zweite Spule von einer elektrischen Isolierschicht umgeben sind, die insbesondere zumindest einen Luftspalt um die erste oder zweite Spule, ein elektrisch nicht leitendes Material umfassendes Betätigungselement der Werkzeuglösevorrichtung oder ein elektrisch nicht leitendes Material umfassendes Trägerelement aufweist.
12. Medizinische, insbesondere dentale, Behandlungseinrichtung umfassend ein medizinisches, insbesondere dentales, Handstück nach einem der vorhergehenden Punkte und ein Lese- und / oder Sendegerät mit einer am Lese- und / oder Sendegerät vorgesehenen Spule, die zur Energie- und / oder Datenübertragung induktiv mit der am Handstück vorgesehenen ersten Spule und / oder mit der am Handstück vorgesehene zweite Spule und / oder mit einer Spule einer Speichereinheit des Behandlungswerkzeugs koppelbar ist.
13. Medizinische, insbesondere dentale, Behandlungseinrichtung nach Punkt 12, wobei
   das Lese- und / oder Sendegerät mit der Steuer- und / oder Versorgungseinheit operativ verbunden ist oder als integraler Teil der Steuer- und / oder Versorgungseinheit ausgebildet ist.
14. Verfahren zur Übertragung von Energie und / oder Betriebs- und / oder Identifikationsdaten mit einem medizinischen, insbesondere dentalen, Handstück oder mit einer medizinischen, insbesondere dentalen, Behandlungseinrichtung nach einem der vorhergehenden Punkte, wobei
   die Übertragung der Energie und / oder Betriebs- und / oder Identifikationsdaten wahlweise induktiv über die am Handstück vorgesehene erste Spule oder leitungsgebunden über zumindest eine mit der Speichereinheit verbundene optische oder elektrische Leitung erfolgt.
15. Verfahren zur Übertragung von Energie und / oder Betriebs- und / oder Identifikationsdaten nach Punkt 14, wobei
   die am Handstück vorgesehene erste Spule oder die am Handstück vorgesehene zweite Spule derart an der Anschlussvorrichtung für das Behandlungswerkzeug angeordnet sind, dass eine induktive Energie- und / oder Datenübertragung mit der Spule der Speichereinheit des Behandlungswerkzeugs erfolgt.

Das im Vorherstehenden bereits beschriebene Merkmal, dass ein medizinisches, insbesondere dentales, Handstück nur eine einzige Spule umfasst, über die der Energie- und / oder Datentransfer zwischen der Speichereinheit des Werkzeugs und der Steuer- und / oder Versorgungseinheit und über die der Energie- und / oder Datentransfer zwischen der Speichereinheit des Handstücks und der Steuer- und / oder Versorgungseinheit erfolgt, stellt ebenfalls einen eigenständigen erfinderischen Aspekt dar. Ein Handstück mit diesem Merkmal kann daher mit in diesem Schriftstück beschriebenen Ausführungsbeispielen anderer Handstücke kombinierbar sein, es kann jedoch auch keines der anderen in diesem Schriftstück beschriebenen Ausführungsbeispiele aufweisen.

Das medizinische, insbesondere dentale, Handstück, ist insbesondere durch folgende Merkmale gekennzeichnet:
1. Medizinisches, insbesondere dentales, Handstück umfassend eine Außenhülse, eine in der Außenhülse angeordnete und in eine Antriebsbewegung versetzbare Anschlussvorrichtung zum Anschluss eines Behandlungswerkzeugs, eine Kupplungsvorrichtung zur Verbindung des Handstücks mit einer Steuer- und / oder Versorgungseinheit und eine an der Anschlussvorrichtung angeordnete erste Spule zur induktiven Kopplung, insbesondere zum induktiven Energie- und / oder Datenaustausch, mit einer eine zweite Spule umfassenden Speichereinheit des Behandlungswerkzeugs zur Speicherung werkzeugbezogener Daten, wobei die erste Spule über elektrische Leitungen mit einem im Handstück vorgesehenen Speicherelement zur Speicherung handstückbezogener Daten elektrisch verbunden ist, so dass zwischen der ersten Spule und einem mit der ersten Spule induktiv koppelbaren Lese- und / oder Sendegerät die werkzeugbezogenen Daten und die handstückbezogenen Daten übertragbar sind.
2. Medizinisches, insbesondere dentales, Handstück nach Punkt 1, wobei das im Handstück vorgesehenen Speicherelement einen beschreibbaren Speicher umfasst, auf dem die werkzeugbezogenen Daten speicherbar sind.
3. Medizinisches, insbesondere dentales, Handstück nach Punkt 1 oder 2, wobei die erste Spule und das im Handstück vorgesehene Speicherelement nebeneinander oder beabstandet voneinander oder auf einem einzigen Trägerelement, insbesondere einer Platine, oder auf unterschiedlichen Trägerelementen angeordnet sind.
4. Medizinisches, insbesondere dentales, Handstück nach einem der vorhergehenden Punkte, umfassend
   eine leitungsgebundene Energieversorgung des im Handstück vorgesehenen Speicherelements und der ersten Spule, insbesondere durch gemeinsame, sich von der Kupplungsvorrichtung erstreckende elektrische Leitungen.
5. Medizinisches, insbesondere dentales, Handstück nach einem der der vorhergehenden Punkte, wobei
   die erste Spule die Anschlussvorrichtung für das Behandlungswerkzeug zumindest teilweise umgibt oder anschließend an das der Werkzeugaufnahmeöffnung abgewandte Ende der Anschlussvorrichtung angeordnet ist.
6. Medizinisches, insbesondere dentales, Handstück nach einem der vorhergehenden Punkte, wobei
   die Anschlussvorrichtung sich entlang einer Mittelachse erstreckt und eine, bezogen auf die Mittelachse, axiale Ausdehnung und radiale Ausdehnung aufweist und wobei die erste Spule innerhalb oder außerhalb der axialen Ausdehnung der Anschlussvorrichtung und innerhalb der radialen Ausdehnung der Anschlussvorrichtung angeordnet ist.
7. Medizinisches, insbesondere dentales, Handstück nach einem der vorhergehenden Punkte, wobei
   die erste Spule in einem Hohlraum zwischen dem der Werkzeugaufnahmeöffnung abgewandten Ende der Anschlussvorrichtung und einem Betätigungselement der Werkzeuglösevorrichtung, insbesondere dem Druckdeckel, angeordnet ist.
8. Medizinisches, insbesondere dentales, Handstück nach einem der vorhergehenden Punkte, wobei
   die erste Spule von einer elektrischen Isolierschicht umgeben ist, die insbesondere zumindest einen Luftspalt um die erste oder zweite Spule, ein elektrisch nicht leitendes Material umfassendes Betätigungselement der Werkzeuglösevorrichtung oder ein elektrisch nicht leitendes Material umfassendes Trägerelement aufweist.
9. Medizinische, insbesondere dentale, Behandlungseinrichtung umfassend ein medizinisches, insbesondere dentales, Handstück nach einem der vorhergehenden Punkte und ein Lese- und / oder Sendegerät mit einer am Lese- und / oder Sendegerät vorgesehenen Spule, die zur Energie- und / oder Datenübertragung induktiv mit der am Handstück vorgesehenen ersten Spule koppelbar ist.
10. Medizinische, insbesondere dentale, Behandlungseinrichtung nach Punkt 9, umfassend
   ein Behandlungswerkzeug mit einer eine zweite Spule umfassenden Speichereinheit zur Speicherung werkzeugbezogener Daten.
11. Medizinische, insbesondere dentale, Behandlungseinrichtung nach Punkt 9 oder 10, wobei
   das Lese- und / oder Sendegerät mit der Steuer- und / oder Versorgungseinheit operativ verbunden ist oder als integraler Teil der Steuer- und / oder Versorgungseinheit ausgebildet ist.
12. Medizinische, insbesondere dentale, Behandlungseinrichtung nach einem der Punkte 9 - 11, umfassend
   eine Steuervorrichtung zur wahlweisen oder sequentiellen Übertragung der werkzeugbezogenen Daten und der handstückbezogenen Daten.
13. Verfahren zur induktiven Datenübertragung mit einem medizinischen, insbesondere dentalen, Handstück oder mit einer medizinischen, insbesondere dentalen, Behandlungseinrichtung, wobei
   zwischen der ersten Spule und einem mit der ersten Spule induktiv koppelbaren Lese- und / oder Sendegerät die werkzeugbezogenen Daten und die handstückbezogenen Daten übertragen werden.
14. Verfahren zur induktiven Datenübertragung nach Punkt 13, wobei das im Handstück vorgesehene Speicherelement einen beschreibbaren Speicher umfasst, auf dem die werkzeugbezogenen Daten gespeichert werden.
15. Verfahren zur induktiven Datenübertragung nach Punkt 14, wobei die Steuervorrichtung die werkzeugbezogenen Daten und die handstückbezogenen Daten wahlweise oder sequentielle überträgt.

Der Vorteil des Handstücks mit einer Spule zur Übertragung der werkzeugbezogenen Daten und der handstückbezogenen Daten besteht insbesondere darin, dass eine zweite Spule und alle mit der zweiten Spule zusammenwirkenden Bauteile zur Energie- und / oder Datenübertragung entfallen.

Gemäß einem Ausführungsbeispiel umfasst das im Handstück vorgesehenen Speicherelement einen beschreibbaren Speicher, auf dem die werkzeugbezogenen Daten speicherbar sind. Damit ist ein besonders effizientes Verfahren zur Datenübertragung realisierbar, bei dem der Anwender das Handstück zum Übertragen der werkzeugbezogenen Daten und der handstückbezogenen Daten nur ein einziges Mal in die Nähe des Lese- und / oder Sendegerät bringen muss.

Umfasst dieses Verfahren zum Beispiel einen Lesevorgang, bei dem werkzeugbezogenen Daten aus der Speichereinheit des Behandlungswerkzeugs gelesen werden, so weist das Verfahren bevorzugt folgende Schritte auf: Zuerst werden das im Handstück vorgesehene Speicherelement mit dem beschreibbaren Speicher und die erste Spule mit Energie versorgt, insbesondere erfolgt die Energieversorgung leitungsgebunden über die Kupplungsvorrichtung des Handstücks. Aufgrund der induktiven Kopplung der ersten Spule mit der eine zweite Spule umfassenden Speichereinheit des Behandlungswerkzeugs wird auch die Speichereinheit mit Energie versorgt. Im nächsten Schritt werden werkzeugbezogenen Betriebs- und / oder Identifikationsdaten mittels eines Mikroprozessors der Speichereinheit aus dem Speicher gelesen und induktiv auf die erste Spule im Handstück übertragen. Von der ersten Spule werden die Daten leitungsgebunden an den beschreibbaren Speicher des Speicherelements des Handstücks geleitet und abgespeichert. Anschließend werden das Handstück und das Lese- und / oder Sendegerät einander derart angenähert, dass eine induktive Kopplung zwischen der ersten Spule des Handstücks und einer weiteren Spule im Lese- und / oder Sendegerät entsteht. Sobald diese induktive Kopplung aufrecht ist, werden die werkzeugbezogenen Daten leitungsgebunden auf die erste Spule im Handstück und anschließend von der ersten Spule induktiv auf die Spule des Lese- und / oder Sendegerät übertragen. Während der induktiven Kopplung zwischen der ersten Spule des Handstücks und der weiteren Spule im Lese- und / oder Sendegerät werden bevorzugt auf die gleiche Weise auch handstückbezogene Daten aus dem Speicherelement des Handstücks über die erste Spule auf das Lese- und / oder Sendegerät induktiv übertragen, insbesondere erfolgt die Übertragung der handstückbezogenen und der werkzeugbezogenen Daten sequentiell. Selbstverständlich ist es auch möglich, wahlweise nur die im Speicherelement des Handstücks gespeicherten werkzeugbezogenen oder handstückbezogenen Daten auf das Lese- und / oder Sendegerät zu übertragen. Die vom Lese- und / oder Sendegerät empfangenen Daten werden von diesem gespeichert und / oder verarbeitet und / oder an eine Auswerteeinheit, insbesondere an die Steuer- und / oder Versorgungseinheit für das Handstück, weitergeleitet.

Werden Daten auf die Speichereinheit des Behandlungswerkzeugs geschrieben, so läuft das gesamte Verfahren umgekehrt ab, d.h. nach der Energieversorgung des im Handstück vorgesehenen Speicherelements mit dem beschreibbaren Speicher und der ersten Spule, werden die werkzeugbezogenen Daten zuerst induktiv auf die erste Spule des Handstücks übertragen, auf dem Speicherelements des Handstücks zwischengespeichert und anschließend induktiv über die erste Spule auf das Speicherelement des Werkzeugs übertragen und dort gespeichert.

Gemäß einem Ausführungsbeispiel weist das Handstück eine leitungsgebundene Energieversorgung des im Handstück vorgesehenen Speicherelements und der ersten Spule auf, die insbesondere durch gemeinsame, sich von der Kupplungsvorrichtung erstreckende elektrische Leitungen gebildet ist. Damit ist in vorteilhafter Weise eine Datenübertragung zwischen der Speichereinheit des Behandlungswerkzeugs und dem Speicherelement des Handstücks möglich, ohne dass das Handstück dafür in die Nähe des Lese- und / oder Sendegerät gebracht werden muss, um von diesem induktiv Energie zu erhalten.

Die Erfindung wird nachfolgend anhand bevorzugter Ausführungsbeispiele und Bezug nehmend auf die beigefügten Zeichnungen erläutert:
Figur 1 zeigt eine Schnittdarstellung eines ersten Ausführungsbeispiels eines medizinischen, insbesondere dentalen, Handstücks mit einer Werkzeughalte-/Lösevorrichtung und einer induktiven Daten- und Energietransfereinheit, die eine erste Spule im Handstück und eine an einem Behandlungswerkzeug befestigte Speichereinheit mit einem Datenspeicher und eine mit dem Datenspeicher verbundenen zweiten Spule umfasst.
Figur 2 zeigt den mit "D" markierten Ausschnitt der Schnittdarstellung der Figur 1 mit der induktiven Daten- und Energietransfereinheit und der Werkzeughalte-/Lösevorrichtung zur Befestigung bzw. zum Lösen des Behandlungswerkzeugs im Handstück.
Figur 3 zeigt eine weitere Schnittdarstellung durch den Kopfteil des Handstücks der Figur 1 mit der induktiven Daten- und Energietransfereinheit und der Werkzeughalte-/Lösevorrichtung, wobei die Schnittebene normal zur Schnittebene der Figur 1 steht.
Figur 4 zeigt in einer perspektivischen Außenansicht ein Ausführungsbeispiel der als patronenartige Einheit ausgebildeten Werkzeughalte-/Lösevorrichtung einschließlich der darin angeordneten ersten Spule und des Trägers für die erste Spule der induktiven Daten- und Energietransfereinheit.
Figur 5 zeigt die patronenartige Einheit der Figur 4 in einer Explosionsdarstellung.
Figur 6 zeigt eine Schnittdarstellung eines zweiten Ausführungsbeispiels eines medizinischen, insbesondere dentalen, Handstücks mit einer induktiven Daten- und Energietransfereinheit und einer Werkzeughalte-/Lösevorrichtung.
Figur 7 zeigt in einer Schnittdarstellung einen Ausschnitt eines Ausführungsbeispiels eines Handstückkopfs mit einer Speichereinheit mit einer wahlweisen induktiven oder leitungsgebundenen Energie- und / oder Datenübertragung.
Figur 8 zeigt eine schematische Darstellung eines Ausführungsbeispiels eines Lese- und / oder Sendegerät und einen Ausschnitt eines Ausführungsbeispiels eines Handstückkopfs mit einer einzigen Spule, über die induktiv werkzeugbezogene Daten und handstückbezogene Daten auf das Lese- und / oder Sendegerät übertragbar sind.
Figur 9 zeigt ein alternatives Ausführungsbeispiel einer Werkzeughalte-/Lösevorrichtung zur Befestigung bzw. zum Lösen des Behandlungswerkzeugs im Handstück und ein Behandlungswerkzeug mit zwei Vertiefungen im Werkzeugschaft zum unterschiedlich tiefen Einführen des Behandlungswerkzeugs in die Werkzeughalte-/Lösevorrichtung.

Die Figuren 10A - 10C zeigen ein alternatives Ausführungsbeispiel einer Werkzeughalte-/Lösevorrichtung zur Befestigung bzw. zum Lösen des Behandlungswerkzeugs im Handstück mit zwei voneinander unabhängigen Haltevorrichtungen für das Behandlungswerkzeug und ein Behandlungswerkzeug zum unterschiedlich tiefen Einführen des Behandlungswerkzeugs in die Werkzeughalte-/Lösevorrichtung.

Figur 11 zeigt ein Ausführungsbeispiel einer Verriegelungshülse der Werkzeughalte-/Lösevorrichtung der Figuren 10A- 10C.

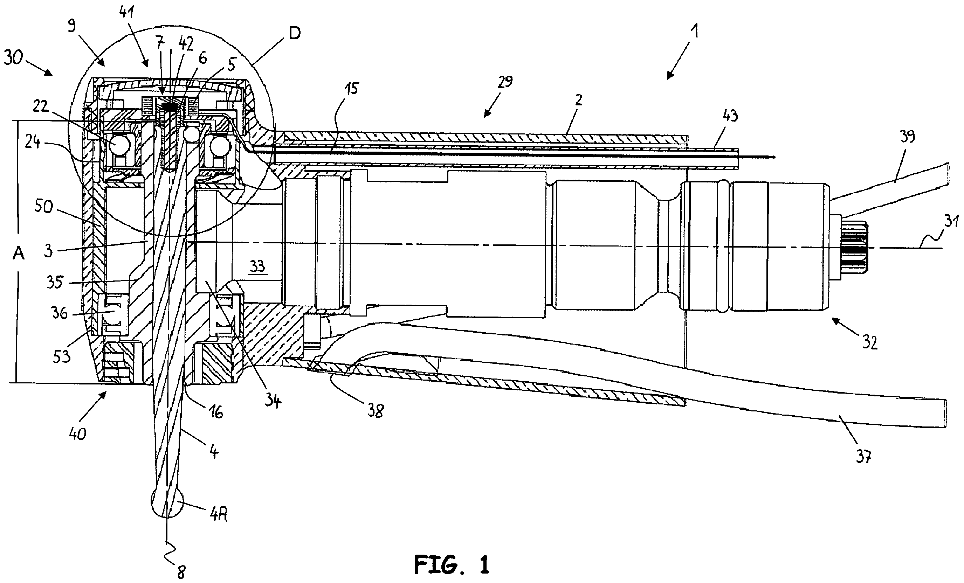

Die Figur 1 zeigt ein medizinisches, insbesondere dentales, Handstück 1 mit einer Außenhülse 2. Das Handstück 1 besteht aus einem Griffabschnitt 29 und einem Kopfteil 30. Am Kopfteil 30 ist seitlich eine Werkzeugaufnahmeöffnung 16 zur Aufnahme eines Behandlungswerkzeugs 4 vorgesehen, so dass das Werkzeug 4 gewinkelt zu Längsachse 31 des Griffabschnitts 29 angeordnet ist. Das Werkzeug 4 ist als in Drehung versetzbarer Dentalbohrer ausgebildet.

Im Inneren des hohlen, länglichen Griffabschnitts 29 befinden sich Antriebsmittel 32, insbesondere eine oder mehrere Antriebswellen 33, die mit einem Motor verbindbar oder verbunden sind. Die Antriebswelle 33 weist an ihrem dem Kopfteil 30 zugewandten Ende ein Zahnrad 34 auf, das mit einem weiteren Zahnrad oder Ritzel 35 im Kopfteil 30 kämmt. Das Zahnrad 35 ist mit einer Hohlwelle 3 verbunden oder als Teil der Hohlwelle 3 ausgebildet. Die Hohlwelle 3 dient zur Aufnahme des Behandlungswerkzeugs 4, so dass die Antriebsbewegung des Motors über die die Welle 33, die Zahnräder 34, 35 und die Hohlwelle 3 umfassenden Antriebsmittel 32 auf das Behandlungswerkzeug 4 übertragbar ist.

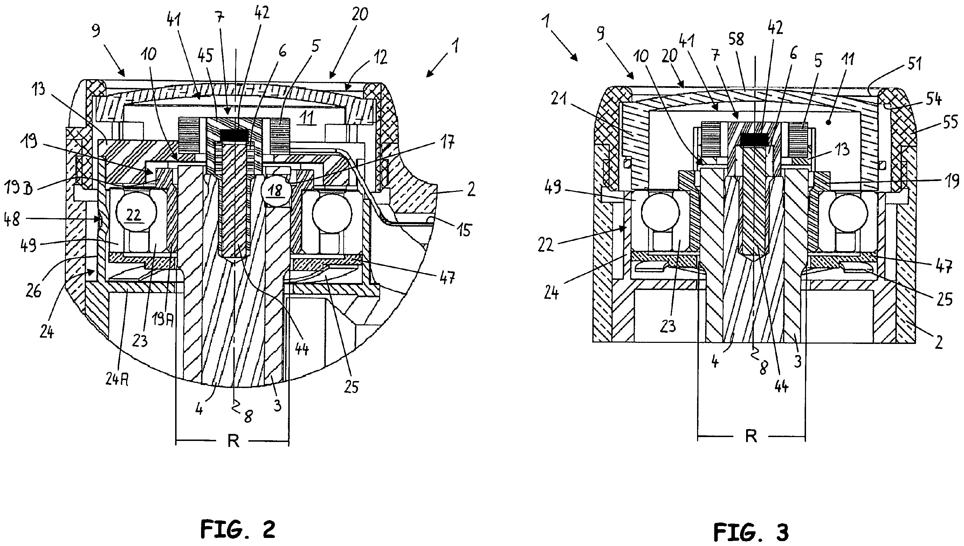

Die Hohlwelle 3 ist durch zwei Wälzlager, insbesondere Kugellager 22, 36, drehbar im Kopfteil 30 des Handstücks 1 gelagert. Sie weist eine Rotations- oder Mittelachse 8, eine axiale Ausdehnung und eine radiale Ausdehnung R (siehe Figuren 2 und 3) auf. Die Hohlwelle 3 besteht zum Beispiel aus Metall, insbesondere aus Stahl, sie kann jedoch gemäß einem Ausführungsbeispiel auch aus einem elektrisch nicht leitenden, insbesondere keramischen, Material hergestellt sein, um den induktiven Energie- oder Datentransfer nicht zu beeinflussen.

Im Griffabschnitt 29 sind des Weiteren eine oder mehrere Medienleitungen vorgesehen, zum Beispiel ein optischer Leiter 37, insbesondere ein Glasfaserstab, der Strahlung einer Strahlungsquelle zu einem Lichtabgabefenster 38 leitet, und eine oder mehrere Fluidleitungen 39, insbesondere zur Leitung von Behandlungsfluiden wie Druckluft und / oder Wasser. Die zumindest eine Fluidleitung 39 ist mit einer oder mehreren Fluidquellen und mit einer Fluidabgabevorrichtung 40 verbunden, die zum Beispiel eine oder mehrere Fluidabgabeöffnungen, eine Mischkammer oder eine Sprayplatte umfasst. Die Fluidabgabevorrichtung ist um die Werkzeugaufnahmeöffnung 16 angeordnet.

Im Kopfteil 30 des Handstücks 1 sind des Weiteren eine Werkzeughalte-/Lösevorrichtung 9 zum Befestigen des Werkzeugs 4 in der Hohlwelle 3 und zum Lösen des Werkzeugs 4 aus der Hohlwelle 3 und eine erste Spule 5 angeordnet. Die gesamte Werkzeughalte-/Lösevorrichtung 9 befindet sich an dem der Werkzeugaufnahmeöffnung 16 abgewandten Ende der Hohlwelle 3. Die ebenfalls an dem der Werkzeugaufnahmeöffnung 16 abgewandten Ende der Hohlwelle 3 angeordnete erste Spule 5 ist in einer Aufnahme oder in einem Hohlraum 11 (siehe Figuren 2 und 3) innerhalb der Werkzeughalte-/Lösevorrichtung 9 oder in einem durch die Werkzeughalte-/Lösevorrichtung 9 gebildeten Hohlraum 11 aufgenommen. Bevorzugt ist das Volumen des Hohlraums 11 größer bemessen als das Volumen oder der Außenumfang der ersten Spule 5, so dass der Hohlraum 11, insbesondere jener Teil des Hohlraums 11, der mit Luft gefüllt ist, auch Teil einer elektrischen Isolierschicht ist, die die erste Spule 5 umgibt.

Die erste Spule 5 ist Teil einer Daten- und Energietransfereinheit 41, die des Weiteren eine am Werkzeug 4 vorgesehene Speichereinheit 7 umfasst. Die Speichereinheit 7 weist eine zweite Spule 6 und einen Speicher 42 auf, wobei der Speicher 42 entweder als Lesespeicher (ROM) oder als Lese- und Schreibspeicher (RAM) ausgebildet ist. Die beiden Spulen 5, 6 sind induktiv miteinander gekoppelt, so dass Energie und / oder Daten zwischen den Spulen 5, 6 übertragen werden können. Dazu ist die erste Spule 5 über eine oder mehrere, zum Beispiel zwei, elektrische Leitungen 15 mit einer innerhalb oder außerhalb des Handstücks 1 angeordneten Energiequelle verbindbar oder verbunden. Die von der Energiequelle zur Verfügung gestellte elektrische Energie wird induktiv von der ersten Spule 5 auf die zweite Spule 6 und weiter zu dem Speicher 42 übertragen. Durch diese Energieversorgung können der Speicher 42 aktiviert und Speicherdaten, zum Beispiel Identifikationsdaten oder Betriebsdaten des Werkzeugs 4, vom Speicher 42 gelesen werden bzw. Speicherdaten, zum Beispiel Daten über die Betriebsdauer, den Reinheits- oder Sterilitätszustand oder über den Verschleiß des Werkzeugs 4, auf den Speicher 42 geschrieben werden. Die Übertragung der Speicherdaten, erfolgt ebenfalls induktiv über die beiden Spulen 5, 6, die nun auch als Antennen dienen und eine, bevorzugt hochfrequente, Datenübertragung, insbesondere im Radiofrequenzbereich, gewährleisten. Dem gemäß umfasst der Speicher 42 bevorzugt ein RFID-Chip oder RFID-Etikett. Die Leitung der Speicherdaten vom Speicher 42 bzw. gegebenenfalls zum Speicher 42 erfolgt ebenfalls über die zumindest zwei elektrischen Leitungen 15.

Die zwei elektrischen Leitungen 15 verlaufen im Inneren des Handstücks 1 und sind durch Isoliermittel, zum Beispiel eine Kunststoffhülle, elektrisch von metallischen Bauteilen des Handstücks 1, insbesondere von der Außenhülse 2, isoliert. Des Weiteren sind die Leitungen 15 von einem Kunststoff- oder Metallrohr 43 umgeben, das zur Abschirmung der Leitungen 15 vor externen Störfeldem dient, zum Beispiel von Magnetfeldem oder elektrischen Feldem, die insbesondere von einem das Werkzeug 4 antreibenden Elektromotor stammen.

Zur Weiterverarbeitung der vom Speicher 42 erhaltenen Speicherdaten und / oder zur Abgabe von Speicherdaten auf den Speicher 42 ist innerhalb oder außerhalb des Handstücks 1 eine Steuereinheit, insbesondere ein Mikrocomputer, vorgesehen, der über die zumindest zwei elektrischen Leitungen 15 mit dem Speicher 42 verbunden ist. Bevorzugt erhält die Steuereinheit Identifikationsdaten vom Speicher 42, die das in die Hohlwelle 3 des Handstücks 1 eingesetzte und mit dem Speicher 42 verbundene Werkzeug 4 identifizieren und die zur Ansteuerung des das Handstück 1 antreibenden Motors oder der Kühlmittelversorgung dienen. Zum Beispiel werden auf diese Weise das Drehmoment oder die Drehzahl des Motors oder die dem Werkzeug 4 zugeleitete Kühlmittelmenge auf maximale Werte begrenzt, die den Eigenschaften des Werkzeugs oder den Anforderungen der medizinischen Behandlung, die mit dem Werkzeug 4 durchführbar ist, entsprechen. Die Steuereinheit bildet somit gemäß diesem besonders bevorzugten Ausführungsbeispiel gemeinsam mit den elektrischen Leitungen 15 und der Daten- und Energietransfereinheit 41 eine Werkzeugerkennungsvorrichtung.

Der detailierte Aufbau der Daten- und Energietransfereinheit 41 ist insbesondere aus den Figuren 2 und 3 erkennbar. Die, bevorzugt unlösbar, mit dem Werkzeug 4 verbundene Speichereinheit 7 umfasst die zweite Spule 6, den Speicher 42 und einen, insbesondere stabförmigen, Ferritkern 44. Die Speichereinheit 7 ist an und / oder auf dem dem Behandlungsabschnitt 4A (siehe Figur 1) gegenüberliegenden Ende des Werkzeugs 4 angeordnet, wobei Teile der Speichereinheit 7, insbesondere der Ferritkern 44, im Werkzeugschaft bzw. in einer Aufnahme des Werkzeugschafts versenkt sind. Alternativ ist die gesamte Speichereinheit 7 auf das Ende des Werkzeugschafts aufgesetzt, ohne dass dabei Teile der Speichereinheit 7 in den Werkzeugschaft ragen. Befestigungsmittel 45, zum Beispiel ein nicht leitendes Isoliermaterial, bevorzugt ein Vergussharz, insbesondere Epoxidharz, befestigen die Speichereinheit 7 am Werkzeug 4. Bevorzugt ist der elektronische Speicher 42 Teil eines elektronischen Chips, das zusätzlich einen Mikrocomputer oder Schaltkreis umfasst, zum Beispiel zum Lesen der Daten aus dem Speicher 42, zur Energieversorgung des Speichers 42 oder gegebenenfalls zum Schreiben von Daten auf den Speicher 42.

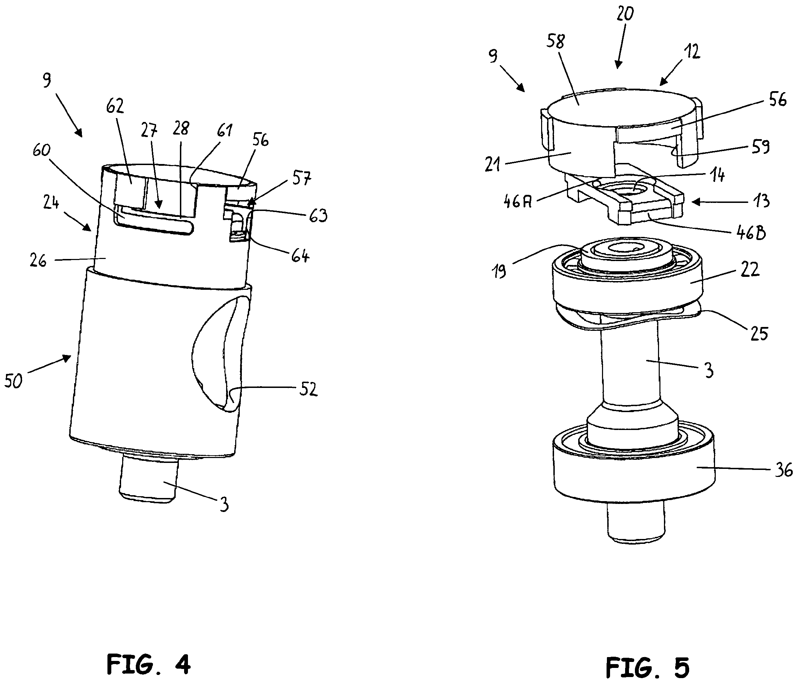

Die Daten- und Energietransfereinheit 41 umfasst des Weiteren die im Handstück 1 in Bezug auf die Hohlwelle 3 unbeweglich angeordnete erste Spule 5. Die erste Spule 5 ist auf einem flächigen, insbesondere platten- oder scheibenförmigen, unbeweglich in Handstück 1 bzw. unbeweglich in Bezug auf die Hohlwelle 3 angeordneten Träger 13 gelagert. Der Träger 13 weist eine Öffnung 14 (siehe Figur 5) auf, um die die erste Spule 5 angeordnet ist und die derart bemessen ist, dass sie für die Speichereinheit 7 des Behandlungswerkzeugs 4 zumindest teilweise durchsetzbar ist, so dass die erste Spule 5 und die Speichereinheit 7 des Behandlungswerkzeugs 4, insbesondere deren zweite Spule 6, ineinander anordenbar sind und ein induktiver Energie- und / oder Datentransfer zwischen den beiden Spulen 5, 6 möglich ist. Ein oder mehrere Rücksprünge oder Vertiefungen 46A, 46B am Träger 13 dienen zur Aufnahme oder zum Stützen der ersten Spule 5 und der mit der ersten Spule 5 verbundenen elektrischen Leitungen 15. Der Träger 13, der Teil einer die erste Spule 5 umgebenden elektrischen Isolierschicht ist, umfasst bevorzugt ein elektrisch isolierendes Material, insbesondere Kunststoff, Glas oder Keramik.

Die erste Spule 5 ist an dem der Werkzeughalte-/Lösevorrichtung 9 des Handstücks 1 zugewandten Ende 10 der Hohlwelle 3 außerhalb der axialen Ausdehnung (A) und innerhalb der radialen Ausdehnung (R) der Hohlwelle 3 angeordnet. Die Öffnung 14 des Trägers 13 und die erste Spule 5 sind konzentrisch zur Mittelachse 8 der Hohlwelle 3 angeordnet.

Aus den Figuren 2 und 3 ist des Weiteren der detaillierte Aufbau der Werkzeughalte-/Lösevorrichtung 9 zu erkennen. Die Werkzeughalte-/Lösevorrichtung 9 ist an dem der Werkzeugaufnahmeöffnung 16 gegenüber liegenden Ende 10 der Hohlwelle 3 angeordnet bzw. umgibt dieses Ende 10. Die Werkzeughalte-/Lösevorrichtung 9 umfasst unter anderem ein eine Bohrung 17 der Hohlwelle 3 durchsetzendes und durch die Bohrung 17 in das Innere der Hohlwelle 3 ragendes Formelement 18, eine beweglich angeordnete, mit dem Formelement 18 zusammenwirkende Verriegelungshülse 19 und ein Betätigungselement 20 zum Bewegen der Verriegelungshülse 19. Das Formelement 18 ist zum Beispiel als Kugel, Halbkugel, Ellipsoid oder als Zylinder ausgebildet. Um eine gleichmäßige und sichere Verspannung des Werkzeugs 4 in der Hohlwelle 3 zu erreichen, sind bevorzugt mehrere Formelemente 18, zum Beispiel drei Formelemente 18, insbesondere gleichmäßig, um die Hohlwelle 3 angeordnet.

Die Verriegelungshülse 19 umgibt die Hohlwelle 3 und ist axial, entlang der Mittelachse 8 der Hohlwelle 3 verschiebbar. Die Verriegelungshülse 19 weist einen ersten Abschnitt 19A mit einem ersten Innendurchmesser und einen zweiten Abschnitt 19B mit einem zweiten, größeren Innendurchmesser auf, wobei der zweite Abschnitt 19B von dem Außenmantel der Hohlwelle 3 beabstandet ist. Die beiden Abschnitte 19A, 19B sind durch einen kurzen konischen Abschnitt miteinander verbunden. Wird die Verriegelungshülse 19 in eine Position verschoben in der, wie in Figur 2 dargestellt, der erste Abschnitt 19A das Formelement 18 berührt und derart weit in die Bohrung 17 drückt, dass ein Teil des Formelements 18 in das Innere der Hohlwelle 3 ragt, so kontaktiert das Formelement 18 das in die Hohlwelle 3 eingesetzte Werkzeug 4, insbesondere in einer oder mehreren Vertiefungen am Werkzeugschaft, wodurch das Werkzeug 4 in der Hohlwelle 3 axial und zur Übertragung des Drehmoments auf das Werkzeug 4 befestigt ist. Wird die Verriegelungshülse 19 in eine Position verschoben, in der der zweite Abschnitt 19B der Verriegelungshülse 19 das Formelement 18 umgibt, so kann das Formelement 18, bezogen auf die Mittelachse 8, radial nach außen weichen, wodurch es nicht mehr in die Vertiefung am Werkzeugschaft oder in das Innere der Hohlwelle 3 ragt und das Werkzeug 4 zum Entnehmen aus der Hohlwelle 3 frei gibt.

Zumindest ein Teil der Verriegelungshülse 19 umgibt den Außenmantel der Hohlwelle 3 und liegt am Innenlaufring 23 des Kugellagers 22 an, so dass die Verriegelungshülse 19 gemeinsam mit der Hohlwelle 3 rotiert. Unterhalb des Kugellagers 22 befinden sich eine ringförmige Lagerscheibe 47 und ein Federelement 25. Das Federelement 25, das insbesondere als Blattfeder ausgebildet ist, spannt die Verriegelungshülse 19 in der in Figur 2 dargestellten Verriegelungsposition vor, in der das Werkzeug 4 in der Hohlwelle 3 fixiert ist. Zum Lösen des Werkzeugs 4 aus der Hohlwelle muss der Anwender die Federkraft des Federelements 25 überwinden, um die Verriegelungshülse 19 in Richtung der Werkzeugaufnahmeöffnung 16 zu verschieben. Da die Verriegelungshülse 19 mit dem Kugellager 22 verbunden ist, sind das Kugellager 22 und die Lagerscheibe 47 ebenfalls verschiebbar im Handstück 1 angeordnet.

Die Verriegelungshülse 19, das Kugellager 22, das Federelement 25 und die Lagerscheibe 47 sind in einem Käfig 24 aufgenommen, der die Hohlwelle 3 umgibt und der unbeweglich, insbesondere undrehbar, im Handstück 1 aufgenommen ist. Der Käfig 24 weist zum Beispiel eine die Hohlwelle 3 konzentrisch umgebende, zylindrische Außenwand 26 und eine Bodenplatte 24A mit einer Öffnung zum Durchtritt der Hohlwelle 3 auf. Bevorzugt ist zwischen dem Wälzlager 22 und der Innenseite der Außenwand 26 oder als integraler Teil der Außenwand 26 ein Befestigungselement 48 vorgesehen, das das Drehen des Außenlaufrings 49 des Wälzlagers 22 unterbindet. Insbesondere ist das Befestigungselement 48 als in das Innere des Käfigs 24 ragender Vorsprung oder Wölbung der Außenwand 26 ausgebildet. Alternativ ist das Befestigungselement 48 als separate Kugel oder separater Stift zwischen dem Wälzlager 22 und der Innenseite der Außenwand 26 ausgebildet.

Wie insbesondere aus den Figuren 1 und 4 zu erkennen ist, ist der Käfig 24 integraler Teil einer Hülse 50 oder mit der Hülse 50 verbunden. Die Patrone oder Hülse 50 umgibt die beiden Wälzlager 22, 36 sowie die Werkzeughalte-/Lösevorrichtung 9 und die Hohlwelle 3 und bildet mit diesen Elementen eine patronenartige Einheit, die über eine der Werkzeugaufnahmeöffnung 16 gegenüber liegende Öffnung in den Kopfteil 30 des Handstücks 1 einsetzbar bzw. daraus entnehmbar ist. Durch eine Bohrung 52 in der Hülse 50 ragt das Zahnrad 34 in den Kopfteil 30, um mit dem Zahnrad 35 zu kämmen. Zur Lagerung der Patrone 50 im Inneren des Kopfteils 30 sind an der Innenseite der Außenhülse 2 zwei Schultern 53 (siehe Figur 1) und 54 (siehe Figur 3) vorgesehen. Die Schuler 54 ist Teil einer lösbar mit der Außenhülse 2 verbindbaren Gewindebuchse 55, die die Patrone 50 im Handstück 1 fixiert und die zum Einsetzen der Patrone 50 in oder zum Lösen der Patrone 50 aus dem Handstück 1 von der übrigen Außenhülse 2 getrennt wird.

Das aus einem magnetisch und elektrisch nicht leitenden Material, insbesondere aus Kunststoff oder Keramik, bestehende Betätigungselement 20 der Werkzeughalte-/Lösevorrichtung 9 umfasst gemäß den Figuren 1 - 3 einen Druckknopf oder Druckdeckel 12. Der Druckdeckel 12 ist zumindest teilweise oder vollständig in der Außenhülse 2 des Handstücks 1 versenkt und mittels ein oder mehrerer Führungselemente 56 entlang der Mittelachse 8 der Hohlwelle 3 verschiebbar. Das Führungselement 56 umfasst zum Beispiel eine Führungsleiste, die in einer Ausnehmung 57 der Käfigwand 26 geführt ist (siehe Figur 4). Das Betätigungselement 20 oder der Druckdeckel 12 umfassen eine die Öffnung 51 verschließende, insbesondere gewölbte, Kappe 58 und zwei Kontaktelemente 21. Die zwei kreisbogenförmigen Kontaktelemente 21 sind am unmittelbaren Außenrand der Kappe 58 und somit radial beabstandet von der Verriegelungshülse 19 oder der Hohlwelle 3 angeordnet. Die beiden Kontaktelemente 21 sind durch zwei Ausnehmungen 59 voneinander getrennt. Wie im weiteren beschrieben wirken die beiden Kontaktelemente 21 mit der Verriegelungshülse 19 zusammen, um das Werkzeug 4 aus der Hohlwelle zu lösen und / oder es in der Hohlwelle 3 zu fixieren. Zusätzlich dienen die Kontaktelemente 21 auch der Führung des Druckdeckels 12 im Kopfteil 30 des Handstücks 1.

Wie insbesondere aus den Figuren 3 und 5 ersichtlich weist der Träger 13 der ersten Spule 5 eine rechteckige Form auf, wobei die beiden kürzeren, einander gegenüberliegenden Seiten des Trägers 13 derart bemessen sind, dass sind in den Ausnehmungen 59 aufnehmbar sind. Die beiden Kontaktelemente 21 umgreifen die erste Spule 5 und den Träger 13 an seinen beiden längeren Seiten und kontaktieren mit ihren freien Enden das Wälzlager 22, insbesondere dessen Außenlaufring 49. Wie bereits weiter oben beschrieben ist das Wälzlager 22 mit der Verriegelungshülse 19 verbunden und durch die Blattfeder 25 vorgespannt, so dass, wenn der Anwender auf die Kappe 58 des Betätigungselements 20 drückt und das Betätigungselement 20 in Richtung der Werkzeugaufnahmeöffnung 16 verschiebt, die Verriegelungshülse 19 über die Kontaktelemente 21 und das Wälzlager 22 aus ihrer Verriegelungsposition bewegt wird. Lässt der Anwender die Kappe 58 los, so verschiebt das Federelement 25 die Verriegelungshülse 19, das Wälzlager 22 und das Betätigungselement 20 wieder in die in der Figur 3 dargestellten Verriegelungsposition.

Durch die seitliche oder radial nach außen verschobene Anordnung der Kontaktelemente 21 im Kopfteil 30 des Handstücks 1 und / oder durch die Anordnung der Kontaktelemente 21 am Außenrand der Kappe 58 des Betätigungselements 20, und bevorzugt zusätzlich durch die Wölbung der Kappe 58, entsteht im Kopfteil 30 oder innerhalb der Werkzeughalte-/Lösevorrichtung 9 eine Aufnahme oder ein Hohlraum 11, in dem in vorteilhafter Weise die erste Spule 5 und bevorzugt auch der Träger 13 und die Speichereinheit 7 der Werkzeugs 4 aufnehmbar sind. Insbesondere ist der Hohlraum 11 zwischen dem der Werkzeughalte-/Lösevorrichtung 9 des Handstücks 1 zugewandten Ende 10 der Hohlwelle 3 und dem Druckdeckel 12 der Werkzeughalte-/Lösevorrichtung 9 angeordnet. Der Träger 13 und die erste Spule 5 sind somit innerhalb der Werkzeughalte-/Lösevorrichtung 9 aufgenommen bzw. es sind an beiden Seiten des Trägers 13 Teile der Werkzeughalte-/Lösevorrichtung 9 angeordnet, wodurch, wie bereits weiter oben beschrieben, insbesondere die erste Spule 5 geschützt ist und zusätzlich ein besonders kompakter Aufbau des Kopfteils 30 erzielt wird.

Zum Bewegen des Betätigungselements 20, insbesondere zum Verschieben in seine in der Figur 3 dargestellten Ausgangsposition, weist das Handstück 1 bevorzugt neben dem Federelement 25 ein weiteres Federelement auf, das das Betätigungselement 20 direkt vorspannt. Dieses Federelement umfasst entweder eine separate Feder, insbesondere eine unterhalb des Betätigungselements 20 angeordnete Spiralfeder, oder das Federelement ist gemäß einem bevorzugten Ausführungsbeispiel als integraler Teil des Käfigs 24, insbesondere der Käfigwand 26, ausgebildet (siehe Figur 4). Dieses Federelement 27 umfasst einen oder mehrere aus der Käfigwand 26 geformte Federlaschen oder Federarme 28, wobei jeder Federarm 28 über zumindest einen Schlitz 60 von der übrigen Käfigwand 26 getrennt ist. Jedem Federarm 28 ist eine Ausnehmung 61 zugeordnet, in die je ein Fortsatz 62 des Betätigungselements 20 eingreift. Jeder Fortsatz 62 kontaktiert einen Federarm 28 und ist an dem Federarm 28 abgestützt.

Aus der Figur 4 ist auch ersichtlich, dass die Ausnehmung 57 des Käfigs 24 eine Schulter oder einen Anschlag 63 zum Begrenzen des Verschiebeweges des Betätigungselements 20 und zum Lagern des Trägers 13 der ersten Spule 5 aufweist. Anschließend an die Schulter 63, in Richtung der Bohrung 52, verengt sich die Ausnehmung 57. Dieser verengte Abschnitt 64 dient dem Austritt der elektrischen Leitungen 15 aus dem Käfig 24.

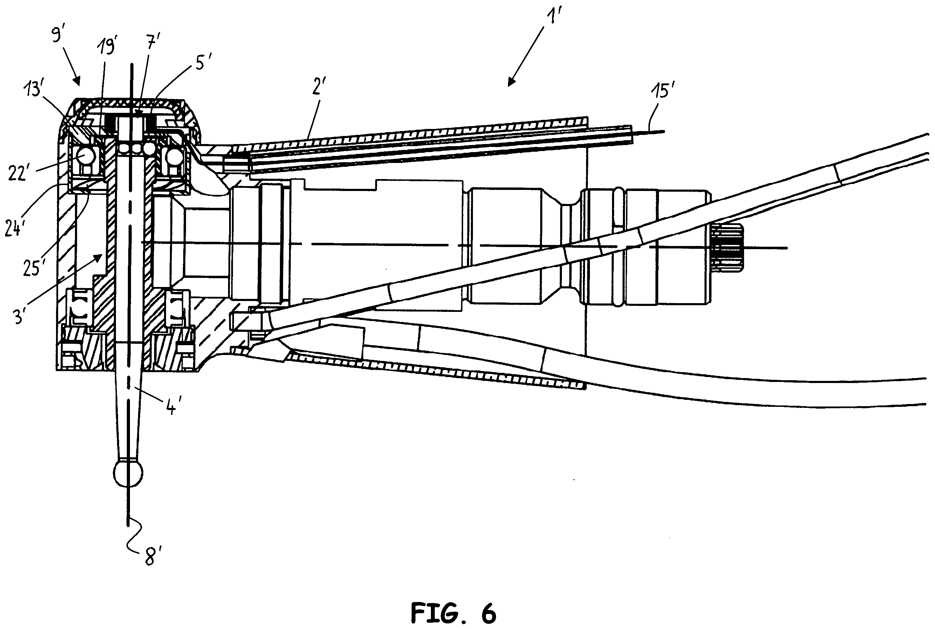

Das Handstück 1' der Figur 6 gleicht in seinem Aufbau dem Handstück 1 der Figur 1. Es weist ebenfalls eine Hohlwelle 3' mit einer Mittelachse 8' zur Aufnahme eines Behandlungswerkzeugs 4' mit einer Speichereinheit 7', eine auf einem Träger 13' gelagerte erste Spule 5', damit verbundene elektrische Leitungen 15', eine Werkzeughalte-/Lösevorrichtung 9' mit einer Verriegelungshülse 19' und ein mit der Verriegelungshülse 19' verbundenes und verschiebbares Lager 22' sowie ein Federelement 25' auf. Die Verriegelungshülse 19', das Lager 22' und das Federelement 25' sind wiederum in einem Käfig 24' aufgenommen, der drehfest und nicht verschiebbar an der Außenhülse 2' des Handstücks 1' gelagert ist. Der Käfig 24' ist gemäß dem Ausführungsbeispiel nach Figur 6 ein separates Bauteil, das die Hohlwelle 3' umgibt, das jedoch nicht, wie bei dem Handstück 1 der Figur 1 Teil einer Patrone ist.

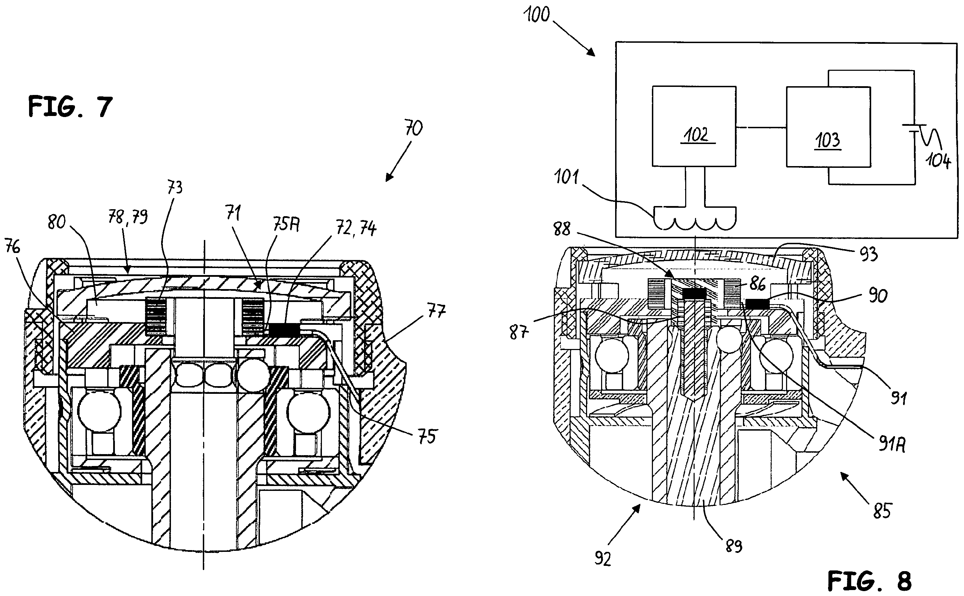

Die Figur 7 zeigt einen Ausschnitt eines Handstücks bzw. eines Handstückkopf 70. Der Aufbau des Handstücks bzw. Handstückkopfs 70 und die Anordnung und Funktionsweise der Bauteile des Handstückkopfs 70, insbesondere der Werkzeughalte-/Lösevorrichtung, der Spule zur induktiven Energie- und / oder Datenübertragung, des die Spule lagernden Trägerelements und der Hohlwelle zur Aufnahme eines Behandlungswerkzeugs, gleichen dem in den Figuren 1 - 5 dargestellten und in der Beschreibung spezifizierten Handstück, so dass darauf nicht noch einmal eingegangen wird.

Im Unterschied zu dem in den Figuren 1 - 5 dargestellten Handstück ist das Handstück 70 mit einer Speichereinheit 71 versehen, die ein Speicherelement 72 zur Speicherung von Betriebs- und / oder Identifikationsdaten des Handstücks 70, eine mit dem Speicherelement 72 verbundene, am Handstück 70 vorgesehene erste Spule 73 und eine mit dem Speicherelement 72 verbundene Lese- und/ oder Schreibvorrichtung 74 zum Auslesen von und/ oder Beschreiben des Speicherelements 72 mit Betriebs- und / oder Identifikationsdaten umfasst. Die Speichereinheit 71 ist über zwei elektrische Leitungen 75 mit der Kupplungsvorrichtung des Handstücks 70 verbunden, über die eine Verbindung zur Steuer- und / oder Versorgungseinheit des Handstücks 70 herstellbar ist. Zwei elektrische Leitungen 75A verbinden das Speicherelement 72 und die Lese- und/ oder Schreibvorrichtung 74 mit der ersten Spule 73. Die Speichereinheit 71 sowie die Leitungen 75, 75A sind auf einem einzigen Trägerelement 76 angeordnet.

Zum Auslesen von Daten aus dem Speicherelement 72 oder zum Speichem von Daten auf dem Speicherelement 72 sowie zur Übertragung von Versorgungsenergie stehen dem Anwender somit zwei Wege frei: Der Energie- und / oder Datentransfer kann entweder leitungsgebunden über die elektrischen Leitungen 75, 75A erfolgen, die Energie, insbesondere elektrische Energie, von der Steuer- und / oder Versorgungseinheit oder direkt von einer Energiequelle erhalten und / oder die mit einer Steuerung, insbesondere einem Mikrocomputer, der Steuer- und / oder Versorgungseinheit verbunden oder verbindbar sind und die Daten der Steuerung zuführen bzw. von der Steuerung erhalten.

Alternativ erfolgt der Energie- und / oder Datentransfer vom oder zum Speicherelement 72 induktiv über die erste Spule 73. Dazu muss das Handstück 70 derart an ein Lese- und / oder Sendegerät 100 (siehe Figur 8) angenähert werden, dass eine induktive Kopplung der ersten Spule 73 mit einer weiteren Spule 101 des Lese- und / oder Sendegeräts 100 entsteht.

Selbstverständlich ist es auch möglich zur Energie- und / oder Datenübertragung beide Übertragungswege gleichzeitig zu nutzen: So kann zum Beispiel die Speichereinheit 71 über die elektrischen Leitungen 75, 75A mit Energie versorgt werden, während gleichzeitig ein induktiver Datentransfer zwischen dem Lese- und / oder Sendegerät 100 und dem Handstück 70 erfolgt. Alternativ kann ein induktiver Energietransfer zwischen dem Lese- und / oder Sendegerät 100 und dem Handstück 70 statt finden und ein leitungsgebundener Datenaustausch über die Leitung 75, die gemäß diesem Ausführungsbeispiel auch als optischer Leiter ausgebildet sein kann.

Um die Qualität des induktiven Datenaustauschs zwischen der ersten Spule 73 und dem Lese- und / oder Sendegerät 100 zu erhöhen, weist das Handstück 70 zumindest eines der folgenden Merkmale auf:
- Zumindest ein Abschnitt der Außenhülse 77 des Handstücks 70, insbesondere jener Abschnitt der Außenhülse 77, der die am Handstück 70 vorgesehene erste Spule 73 umgibt, umfasst ein magnetisch und elektrisch nicht leitendes Material, insbesondere Kunststoff, Glas oder Keramik. Bevorzugt umfasst das Betätigungselement 78 der Werkzeughalte-/Lösevorrichtung, insbesondere dem Druckdeckel 79, ein elektrisch nicht leitendes Material.
- Die erste Spule 73 ist an der Außenhülse 77 oder angrenzend an die Außenhülse 77 oder zumindest teilweise in der Außenhülse 77 angeordnet.
- Die am Handstück 70 vorgesehene erste Spule 73 ist von einer elektrischen Isolierschicht umgeben, die insbesondere zumindest einen Luftspalt 80 um die erste Spule 73, ein elektrisch nicht leitendes Material umfassendes Betätigungselement 78 der Werkzeuglösevorrichtung oder ein elektrisch nicht leitendes Material umfassendes Trägerelement 76 aufweist.

Der in der Figur 8 dargestellte Ausschnitt eines Handstücks bzw. eines Handstückkopf 85 stellt eine Kombination des Handstücks 1 der Figuren 1 - 5 und des Handstücks 70 der Figur 7 dar. Das Handstück 85 umfasst somit insbesondere eine erste Spule 86 zur induktiven Kopplung, insbesondere zum induktiven Energie- und / oder Datenaustausch, mit einer eine zweite Spule 87 umfassenden Speichereinheit 88 des Behandlungswerkzeugs 89 zur Speicherung werkzeugbezogener Daten und ein im Handstück 85 vorgesehenes Speicherelement 90 zur Speicherung handstückbezogener Daten. Die erste Spule 86 ist über elektrische Leitungen 91A mit dem Speicherelement 90 elektrisch verbunden.

Das Lese- und / oder Sendegerät 100 umfasst neben der Spule 101 zur induktiven Kopplung mit der Spule 86 des Handstücks 85 einen, bevorzugt bidirektionalen, Signalverstärker 102 für die induktiv übertragbaren Daten, eine Signalverarbeitungseinheit 103 und eine Energiequelle 104 oder einen Anschluss an eine Energiequelle. In Figur 8 sind das Handstück 85 und das Lese- und / oder Sendegerät 100 derart nahe aneinander angeordnet, dass eine induktive Kopplung zur Energie- und / oder Datenübertragung zwischen der Spule 86 des Handstücks 85 und der Spule 101 des Lese- und / oder Sendegeräts 100 erfolgt. Durch die Aufnahme der Spule 87 des Behandlungswerkzeugs in der Spule 86 des Handstücks 85 sind auch diese beiden Spulen 86, 87 zur Energie- und / oder Datenübertragung induktiv miteinander gekoppelt.

Das Speicherelement 90 des Handstücks 85 ist als beschreibbarer Speicher ausgebildet, der insbesondere werkzeugbezogene Daten während ihres Transfers zwischen dem Lese- und / oder Schreibgerät 100 und der Speichereinheit 88 des Behandlungswerkzeugs 89 zwischenspeichert. Die elektrischen Leitungen 91 versorgen das Speicherelement 90, die Spule 86 und die Speichereinheit 88 des Werkzeugs 89 leitungsgebunden mit elektrischem Strom. Aufgrund der Anordnung der Spule 86 des Handstücks 85 an der Anschlussvorrichtung 92 für das Behandlungswerkzeug 89 und nahe der Außenhülse des Handstücks 85, insbesondere unterhalb des Betätigungselements 93 der Werkzeuglösevorrichtung, sowie aufgrund der elektrischen Verbindung zwischen der Spule 86 und dem Speicherelement 90 ist es möglich, sowohl die werkzeugbezogenen Daten als auch die handstückbezogenen Daten induktiv über die erste Spule 86 zu übertragen. Die, insbesondere sequentielle oder wahlweise, Übertragung der werkzeugbezogenen Daten und der handstückbezogenen Daten wird bevorzugt durch eine Steuervorrichtung gesteuert, die Teil des Lese- und / oder Schreibgeräts 100, des Handstücks 85 und / oder der Steuer- und / oder Versorgungseinheit des Handstücks 85 ist.

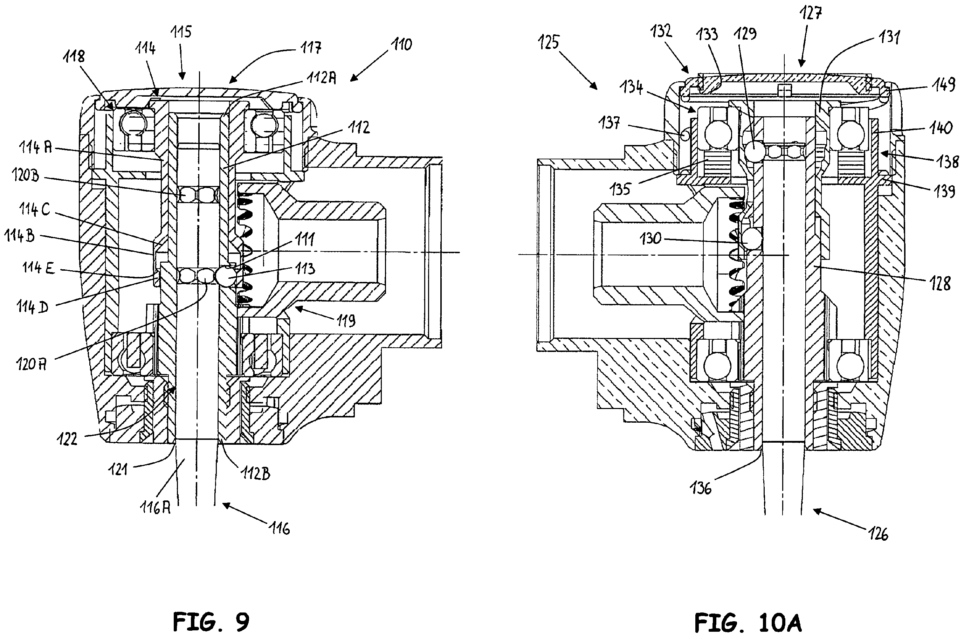

Der Aufbau der Werkzeughalte-/Lösevorrichtung 117 des in der Figur 9 dargestellten medizinischen, insbesondere dentalen, Handstücks 110 entspricht in vielen Merkmalen der Werkzeughalte-/Lösevorrichtung 9 der Figuren 2 und 3, so dass im Folgenden vor allem die zusätzlichen oder von der Werkzeughalte-/Lösevorrichtung 9 differierenden Merkmale und Eigenschaften der Werkzeughalte-/Lösevorrichtung 117 beschrieben werden.

Die Werkzeughalte-/Lösevorrichtung 117 umfasst ein oder mehrere, insbesondere drei, Bohrung 111 der Hohlwelle 112 durchsetzende und durch die Bohrungen 111 in das Innere der Hohlwelle 112 ragende Formelemente 113, eine beweglich angeordnete, mit dem Formelement 113 zusammenwirkende Verriegelungshülse 114 und ein mit der Verriegelungshülse 114 zusammenwirkendes Betätigungselement 115 zum Bewegen der Verriegelungshülse 114. Die Formelemente 113 sind zum Beispiel als Kugel, Halbkugel, Ellipsoid oder als Zylinder ausgebildet.

Die Verriegelungshülse 114 umgibt die Hohlwelle 112 und ist axial, entlang der Mittelachse der Hohlwelle 112 verschiebbar. Die Verriegelungshülse 114 weist einen ersten Abschnitt 114A mit einem ersten Innendurchmesser und einen zweiten Abschnitt 114B mit einem zweiten, größeren Innendurchmesser auf, so dass der zweite Abschnitt 114B von dem Außenmantel der Hohlwelle 3 weiter beabstandet ist als der erste Abschnitt 114A. Die beiden Abschnitte 114A, 114B sind durch einen kurzen konischen Abschnitt 114 C miteinander verbunden. An den Abschnitt 114B schließt ein konusförmiger Abschnitt 114E und ein weiterer Abschnitt 114D an, dessen Innendurchmesser geringer ist als der Innendurchmesser des Abschnitts 114B. Wie in Figur 9 dargestellt, drückt der Abschnitt 114D zur axialen Befestigung des Werkzeugs 116 in der Hohlwelle 112 und zur Drehmomentübertragung auf das Werkzeug 116 das Formelement 113 in die Bohrung 111, so dass ein Teil des Formelements 113 in das Innere der Hohlwelle 112 ragt und das Formelement 113 das Werkzeug 116 kontaktiert, insbesondere in einer oder mehreren Vertiefungen 120A, 120B am Werkzeugschaft. Wird die Verriegelungshülse 114 in eine Position verschoben, in der der zweite Abschnitt 114B das Formelement 113 umgibt, so kann das Formelement 113, bezogen auf die Mittelachs, radial nach außen weichen, wodurch es nicht mehr in die Vertiefungen 120A, 120B am Werkzeugschaft oder in das Innere der Hohlwelle 112 ragt und das Werkzeug 116 zum Entnehmen aus der Hohlwelle 112 frei gibt.

Zumindest ein Teil der länglichen, rohrförmigen Verriegelungshülse 114 umgibt den Außenmantel der Hohlwelle 112 und liegt mittels einer Schulter am Innenlaufring des Wälzlagers 118 an, so dass die Verriegelungshülse 114 gemeinsam mit der Hohlwelle 112 rotiert. Die beiden Abschnitte 114B und 114D umgeben die Hohlwelle 112 in einem Bereich zwischen ihren beiden Enden 112A, 112B, zum Beispiel in etwa im Bereich der Hälfte der Längsausdehnung der Hohlwelle 112. Dem gemäß sind auch die Bohrung 111 und das Formelement 113 von den Endbereichen 112A, 112B der Hohlwelle 112 beabstandet. Insbesondere sind die Abschnitte 114B, 114D zwischen dem Außenmantel der Hohlwelle 112 und dem die Hohlwelle 112 in Bewegung versetzenden Antriebselement 119 des Handstücks 110, zum Beispiel dem Zahnrad des Antriebselements 119, angeordnet.

Das Behandlungswerkzeug 116 umfasst neben einem Behandlungsabschnitt einen Schaftabschnitt 116A, an dem zumindest zwei, axial voneinander entfernt angeordnete Kontaktflächen 120A, 120B, zum Beispiel Aufnahmen, Einstiche, Rücksprünge oder Vertiefungen, zum Eingriff des zumindest einen Formelements 113 vorgesehen sind. Die Vertiefungen 120A, 120B können zum Beispiel den Schaftabschnitt 116A ringförmig oder halbkreisförmig umgeben und / oder Kalotten aufweisen. Das Behandlungswerkzeug 116 bildet somit mit der Werkzeughalte-/Lösevorrichtung 117 eine medizinische, insbesondere dentale, Behandlungseinheit, die es dem Anwender ermöglicht, das Behandlungswerkzeug 116 unterschiedlich tief in die Hohlwelle 112 zu schieben und somit die Länge des Abschnitts des Behandlungswerkzeugs 116, der aus dem Handstück 110 bzw. aus dem Handstückkopf heraus ragt, zu variieren. Das Behandlungswerkzeug 116 kann somit wahlweise in einer ersten Einsteckposition, in der das Formelement 113 in die Aufnahme 120B eingreift, oder in einer zweiten Einsteckposition, in der das Formelement 113 in die Aufnahme 120A eingreift, im Handstückkopf 110 fixiert werden. Damit das Behandlungswerkzeug 116 insbesondere in der ersten Einsteckposition, in der ein längerer Abschnitt des Behandlungswerkzeugs 116 aus dem Handstückkopf 110 ragt, zuverlässig und sicher im Handstückkopf gehalten ist, bildet die Hohlwelle 112 einen einteiligen Werkzeugsitz 122, der sich durchgängig vom Betätigungselement 115 oder vom Antriebselement 119 bis zur Werkzeugaufnahmeöffnung 121 erstreckt.

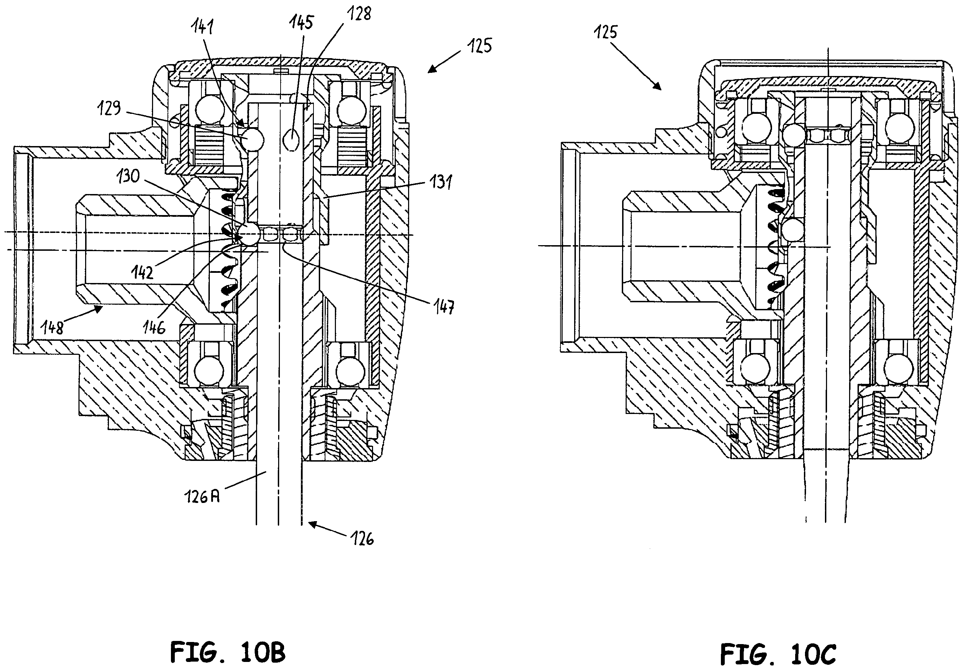

Die Figuren 10A - 10C zeigen ein alternatives Ausführungsbeispiel eines Handstücks 125, dessen Werkzeughalte-/Lösevorrichtung 127 ebenfalls derart ausgebildet ist, dass das Behandlungswerkzeug 126 unterschiedlich tief in die Werkzeughalte-/Lösevorrichtung 127 einführbar ist. Die Figur 10A zeigt das Werkzeug 126 in einer ersten Position, in der es tief in die Hohlwelle 128 der Werkzeughalte-/Lösevorrichtung 127 eingeführt ist. Die Figur 10B zeigt das Werkzeug 126 in einer zweiten Position, in der es weniger tief in die Hohlwelle 128 der Werkzeughalte-/Lösevorrichtung 127 eingeführt ist als in der Figur 10A, so dass ein längerer Abschnitt des Behandlungswerkzeugs 126 aus dem Handstück 125 bzw. aus dem Handstückkopf ragt. Die Figur 10C zeigt die Werkzeughalte-/Lösevorrichtung 127 in ihrer entriegelten Position, so dass das Behandlungswerkzeug 126 zum Beispiel aus der Hohlwelle 128 entnehmbar ist oder in die zweite Position gemäß Figur 10B verschiebbar ist.

Der grundsätzliche Aufbau der Werkzeughalte-/Lösevorrichtung 127 des in den Figuren 10A - 10C dargestellten medizinischen, insbesondere dentalen, Handstücks 125 entspricht in vielen Merkmalen der Werkzeughalte-/Lösevorrichtung 9 der Figuren 2 und 3 oder der Werkzeughalte-/Lösevorrichtung 117 der Figur 9, so dass im Folgenden vor allem die zusätzlichen oder differierenden Merkmale und Eigenschaften der Werkzeughalte-/Lösevorrichtung 127 beschrieben werden.

Die Werkzeughalte-/Lösevorrichtung 127 umfasst mehrere, in das Innere der Hohlwelle 128 ragende Formelemente 129, 130, eine beweglich angeordnete, mit den Formelementen 129, 130 zusammenwirkende Verriegelungshülse 131 und ein mit der Verriegelungshülse 131 zusammenwirkendes Betätigungselement 132 zum Bewegen oder Verschieben der Verriegelungshülse 131. Die Formelemente 129, 130 sind zum Beispiel als Kugel, Halbkugel, Ellipsoid oder als Zylinder ausgebildet. Die kugelig ausgebildeten Formelemente 129, 130 oder ihre kugeligen Enden weisen bevorzugt den gleichen Radius auf.

Gleich wie bei den Werkzeughalte-/Lösevorrichtungen 9 und 117 der vorhergehenden Ausführungsbeispiele bewegt der Anwender die Verriegelungshülse 131 durch Drücken auf das Betätigungselement 132, dessen zumindest einer Fortsatz oder zumindest eines Kontaktelement 133 das Wälzlager 134, insbesondere dessen Außenlaufring, kontaktiert und gegen die Kraft eines Federelements oder Federpakets 135 in Richtung der Werkzeugaufnahmeöffnung 136 verschiebt. Die mit dem Wälzlager 134 verbundene Verriegelungshülse 131 wir dadurch ebenfalls in Richtung der Werkzeugaufnahmeöffnung 136 verschoben (siehe Figur 10C). Wird das Betätigungselement 132, das bevorzugt als Druckdeckel oder Druckknopf ausgebildet ist, los gelassen, so schiebt das Federpaket 135 das Wälzlager 134 und die Verriegelungshülse 131 selbsttätig wieder in Richtung des Betätigungselements 132 (siehe Figuren 10A oder 10B). Das Betätigungselement 132 wird durch ein weiteres Federelement 137 ebenfalls wieder in seine Ausgangsstellung bewegt.

Das Federelement 137 ist auf einem Käfig 138 zur Aufnahme des Federpakets 135 und des Wälzlagers 134 gelagert, insbesondere auf einer Schulter 139 des Käfigs 138, die durch eine Ringwand 140 von dem Federpaket 135 und dem Wälzlagers 134 getrennt ist. Das Federelement 137 kontaktiert das Betätigungselement 132 an seinem Außenumfang, insbesondere an einer dort vorgesehenen ringförmigen Schulter 149. Diese Schulter 149 dient auch als Führungselement entlang der Innenwand des Gehäuses des Handstücks 125. Der Fortsatz 133 ist gemäß diesem Ausführungsbeispiel von dem unmittelbaren Außenumfang des Betätigungselements 132 oder von der Ringwand 140 beabstandet oder, bezogen auf die Mittelachse der Werkzeughalte-/Lösevorrichtung 127, radial von der Verriegelungshülse 131 oder zwischen dem Federelement 137 und der Verriegelungshülse 131 angeordnet.

Zur Positionierung des Behandlungswerkzeugs 126 in unterschiedlichen Positionen oder Einstecktiefen in der Hohlwelle 128 weist das Handstück 125 zumindest zwei separate, axial voneinander beabstandete Halteeinheiten 141, 142 auf. Jede Halteeinheit 141, 142 umfasst ein oder mehrere, bevorzugt drei, Formelemente 129, 130, die zum Beispiel als Kugel, Halbkugel, Ellipsoid, Zylinder oder Stifte ausgebildet sind, sowie eine oder mehrere Bohrungen 145, 146 in der Hohlwelle 128, wobei die Anzahl der Bohrungen 145, 146 insbesondere der Anzahl Formelemente 129, 130 entspricht. Die Formelemente 129, 130 durchsetzen die Bohrungen 145, 146 und ragen durch die Bohrung 145, 146 in das Innere der Hohlwelle 128, um eine Kontaktfläche 147 des Behandlungswerkzeugs 126, zum Beispiel in Form einer Aufnahme, eines Einstichs, eines Rücksprungs oder einer Vertiefung, zu kontaktieren und dadurch das Behandlungswerkzeug 126 axial in der Hohlwelle 128 zu fixieren und eine Drehmoment auf das Behandlungswerkzeug 126 zu übertragen. Bevorzugt ist eine der beiden Haltevorrichtungen 141, 142 zwischen dem Außenmantel der Hohlwelle 128 und dem die Hohlwelle 128 in Bewegung versetzenden Antriebselement 148 des Handstücks 125, zum Beispiel dem Zahnrad des Antriebselements 148, angeordnet.

Das Behandlungswerkzeug 126 weist einen Arbeits- oder Behandlungsabschnitt und einen Schaftabschnitt 126A auf, an dem die einzige Kontaktfläche 147 vorgesehen ist. Die Kontaktfläche 147 umgibt zum Beispiel den Schaftabschnitt 126A ringförmig oder halbkreisförmig und / oder weist Kalotten auf. Bevorzugt ist die Kontaktfläche 147 unmittelbar am Ende des Behandlungswerkzeugs 126 angeordnet. Durch Einschieben der Kontaktfläche 147 in die Hohlwelle 128 wahlweise bis zur ersten Halteeinheit 141 oder bis zur zweiten Halteeinheit 142 ist die Einsteckposition oder Einstecktiefe des Behandlungswerkzeugs 126 bzw. die Länge des Abschnitts des Behandlungswerkzeugs 126, der aus dem Handstückkopf 125 ragt, durch den Anwender festlegbar.

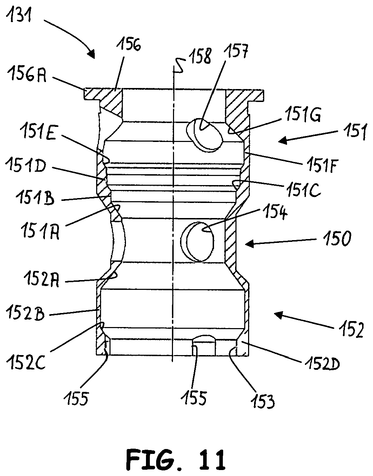

Der Aufbau der die Fixierung und Freigabe des Behandlungswerkzeugs 126 bewirkenden Verriegelungshülse 131 ist insbesondere aus der Figur 11 ersichtlich: Die Verriegelungshülse 131 weist eine längliche, hohle oder rohrförmige Gestalt auf. Die Verriegelungshülse 131 umfasst einen zentralen Abschnitt 150 und zwei, an gegenüberliegenden Enden des zentralen Abschnitts 150 anschließende Abschnitte 151, 152 zur Aufnahme jeweils eines Formelements 129, 130. Die Verriegelungshülse 131 bzw. die drei Abschnitte 150, 151, 152 werden von einer Bohrung 153 durchsetzt, die aufgrund der unterschiedlichen Innendurchmesser des zentralen Abschnitts 150 und der beiden Abschnitte 151, 152 unterschiedliche lichte Weiten aufweist. Die Bohrung 153 dient der Aufnahme der Hohlwelle 128, so dass die Verriegelungshülse 131 die Hohlwelle 128 umgibt und axial, entlang der Mittelachse der Hohlwelle 128 verschiebbar ist.

Am zentralen Abschnitt 150 ist zumindest eine Bohrung oder Öffnung 154 zum Durchtritt von Schmiermittel zwischen die Verriegelungshülse 131 und die Hohlwelle 128 vorgesehen.

Der Abschnitt 151 weist einen konischen Übergangsbereich 151A zum zentralen Abschnitt 150, einen Abschnitt 151B mit einem im Vergleich zum zentralen Abschnitt 150 größeren inneren Durchmesser, einen konischen Bereich 151C, einen Abschnitt 151D mit einem im Vergleich zum Abschnitt 151B größeren Innendurchmesser, einen konischen Abschnitt 151E, einen Abschnitt 151F mit einem im Vergleich zum Abschnitt 151D größeren Innendurchmesser, und einen konischen Übergangsbereich 151G zu einem Anschlussabschnitt 156 der Verriegelungshülse 131 auf. Der Anschlussabschnitt 156 verbindet die Verriegelungshülse 131 mit dem Wälzlager 134 und weist dazu insbesondere einen von der Verriegelungshülse 131 radial abstehenden Ringflansch 156A auf. Im Abschnitt 151, insbesondere im konischen Übergangsbereich 151G, sind des Weiteren ein oder mehrere Montageöffnungen 157 zur Erleichterung des Einbaus der Formelemente 129 in die Bohrungen 145 vorgesehen.

Der Abschnitt 152 weist einen konischen Übergangsbereich 152A zum zentralen Abschnitt 150, einen Abschnitt 152B mit einem im Vergleich zum zentralen Abschnitt 150 größeren inneren Durchmesser, einen schmalen konischen Abschnitt 152C und einen Abschnitt 152D mit einem im Vergleich zum Abschnitt 152B geringeren inneren Durchmesser auf. Am Abschnitt 152D sind ein oder mehrere Einstiche oder Rücksprünge 155 vorgesehen, wobei die Anzahl der Einstiche 155 insbesondere der Anzahl der Formelemente 130 entspricht.

Wie im Folgenden beschrieben bilden die konischen Abschnitte 151A, 151C, 151E, 151G, 152A und 152C im Inneren der Bohrung 153 Lagerstellen oder Ringschultern zur Lagerung für die Formelemente 129, 130: Nimmt das Behandlungswerkzeug 126 seine tiefe Einsteckposition ein, so wie dies in Figur 10A dargestellt ist, so lagert das Formelement 129 auf dem konischen Abschnitt 151C und wird durch diesen Abschnitt 151C und den zylindrischen Abschnitt 151D durch die Bohrung 145 in die Aufnahme 147 des Behandlungswerkzeugs 126 gedrückt. Gleichzeitig wird das Formelement 130 durch den konischen Abschnitt 152C, auf dem es lagert, und durch den zylindrischen Abschnitt 152B in die Bohrung 146 gedrückt, so dass es zumindest darin fixiert ist und gegebenenfalls auch den Schaftabschnitt 126A berührt. Da das Formelement 129 zur Fixierung des Behandlungswerkzeugs 126 in dieser tiefen Einsteckposition weiter in die Hohlwelle 128 ragt als das Formelement 130 oder das Formelement 129 näher zur Mittelachse der Hohlwelle 128 angeordnet ist als das Formelement 130, ist der Innendurchmesser des Abschnitts 151D geringer als der Innendurchmesser des Abschnitts 152B.

Bei der in der Figur 10B dargestellten Einsteckposition, bei der ein längerer Teil des Behandlungswerkzeugs 126 aus dem Handstück 125 ragt, wird das Formelement 130 durch den zylindrischen Abschnitt 152D durch die Bohrung 146 in die Aufnahme 147 des Behandlungswerkzeugs 126 gedrückt. Das Formelement 129 lagert auf dem Abschnitt 151A und wird durch diesen konischen Abschnitt 151A und durch den zylindrischen Abschnitt 151B in der Bohrung 145 fixiert. Ein Teil des Formelements 129 ragt dabei in das Innere der Hohlwelle 128, ohne das Behandlungswerkzeug 126 zu berühren. Der Innendurchmesser des Abschnitts 152D und des Abschnitts 151B sind in etwa gleich groß. Der axiale Abstand (bezogen auf die Mittelachse 158 der Verriegelungshülse 131) zwischen dem zylindrischen Abschnitt 152D und dem zylindrischen Abschnitt 151D, die abhängig von der Einstecktiefe die Formelemente 129, 130 in die Aufnahme 147 des Behandlungswerkzeugs 126 drücken, ist größer als der axiale Abstand der Mittelpunkte oder Längsachsen der beiden Formelemente 129, 130.

Zum Lösen des Behandlungswerkzeugs 126 aus seinen Einsteckpositionen werden die Formelemente 129, 130 und die Aufnahme 147 des Behandlungswerkzeugs 126 außer Eingriff gebracht (siehe Figur 10C). Dabei befindet sich das Formelement 129 in den Abschnitten 151E und 151F und das Formelement 130 im Abschnitt 152B. Die zylindrischen Abschnitte 151F und 152B weisen somit in etwa denselben Innendurchmesser auf und sind axial gleich weit voneinander entfernt wie die Mittelpunkte oder Längsachsen der beiden Formelemente 129, 130.

Die Einstiche 155 im zylindrischen Abschnitt 152D dienen zur Aufnahme jeweils eines Formelements 130. Die Einstiche 155 und die Formelemente 130 bilden einen Mitnehmer, der gewährleistet, dass die Verriegelungshülse 131 mit der Hohlwelle 128 rotiert, insbesondere wenn das Handstück 125 betrieben und die Hohlwelle 128 in Rotation versetzt werden, ohne dass ein Werkzeug 126 in der Hohlwelle 128 aufgenommen ist. Die Entfernung zwischen dem zylindrischen Abschnitt 151D und der Mittelachse 158 der Verriegelungshülse 131 ist in etwa gleich groß wie die Entfernung zwischen dem Boden des Einstichs 155 und der Mittelachse 158. Dem gemäß ist der Innendurchmesser des zylindrischen Abschnitts 151D größer als der Innendurchmesser des zylindrischen Abschnitt 152D mit seinen drei Einstichen 155.

Selbstverständlich können gemäß einem Ausführungsbeispiel die Handstückköpfe 110 und 125 der Figuren 9 und 10A - 10C mit einer Spule zur induktiven Kopplung mit einer eine zweite Spule umfassenden Speichereinheit eines Behandlungswerkzeugs versehen sein. Bevorzugt ist die Spule an der oder um die jeweilige Hohlwelle 112, 128 der Handstückköpfe 110, 125 vorgesehen, besonders bevorzugt ist die Spule innerhalb oder außerhalb der axialen Ausdehnung der Hohlwellen 112, 128 und innerhalb der radialen Ausdehnung der Hohlwellen 112, 128 angeordnet.

## Patentansprüche

1. Medizinisches, insbesondere dentales, Handstück (1, 1') umfassend eine Außenhülse (2), eine in der Außenhülse (2, 2') angeordnete und in eine Antriebsbewegung versetzbare Hohlwelle (3, 3') zur Aufnahme eines Behandlungswerkzeugs (4, 4') und eine erste Spule (5, 5') zur induktiven Kopplung mit einer eine zweite Spule (6) umfassenden Speichereinheit (7, 7') des Behandlungswerkzeugs (4, 4'), wobei die Hohlwelle (3, 3') sich entlang einer Mittelachse (8, 8') erstreckt und eine, bezogen auf die Mittelachse (8, 8'), axiale Ausdehnung (A) und radiale Ausdehnung (R) aufweist, **dadurch gekennzeichnet, dass**
die erste Spule (5, 5') innerhalb oder außerhalb der axialen Ausdehnung (A) der Hohlwelle (3, 3') und zumindest ein Teil der ersten Spule (5, 5') innerhalb der radialen Ausdehnung (R) der Hohlwelle (3, 3') angeordnet ist.

2. Medizinisches, insbesondere dentales, Handstück (1, 1') nach Anspruch 1, **dadurch gekennzeichnet, dass**
die erste Spule (5, 5') an dem der Werkzeughalte-/Lösevorrichtung (9, 9') des Handstücks (1, 1') zugewandten Ende (10) der Hohlwelle (3, 3') oder anschließend an das der Werkzeughalte-/Lösevorrichtung (9, 9') des Handstücks (1, 1') zugewandten Ende (10) der Hohlwelle (3, 3') angeordnet ist.

3. Medizinisches, insbesondere dentales, Handstück (1, 1') nach Anspruch 1 oder 2, **dadurch gekennzeichnet, dass**
die erste Spule (5, 5') in einem Hohlraum (11) zwischen dem der Werkzeughalte-/Lösevorrichtung (9, 9') des Handstücks (1, 1') zugewandten Ende (10) der Hohlwelle (3, 3') und einem Teil der Werkzeughalte-/Lösevorrichtung (9, 9'), insbesondere einem Betätigungselement (20) der Werkzeughalte-/Lösevorrichtung (9, 9'), zum Beispiel dem Druckdeckel (12), angeordnet ist.

4. Medizinisches, insbesondere dentales, Handstück (1, 1') nach einem der vorhergehenden Ansprüche, **dadurch gekennzeichnet, dass**
die erste Spule (5, 5') in Bezug auf die Hohlwelle (3, 3') unbeweglichen im Handstück (1, 1') angeordnet ist.

5. Medizinisches, insbesondere dentales, Handstück (1, 1') nach einem der vorhergehenden Ansprüche, **dadurch gekennzeichnet, dass**
die erste Spule (5, 5') auf einem in Bezug auf die Hohlwelle (3, 3') unbeweglichen, insbesondere flächigen, Träger (13, 13') angeordnet ist.

6. Medizinisches, insbesondere dentales, Handstück (1, 1') nach Anspruch 5, **dadurch gekennzeichnet, dass**
der Träger (13, 13') eine Öffnung (14) aufweist, um die die erste Spule (5, 5') angeordnet ist und die derart bemessen ist, dass sie für die Speichereinheit (7, 7') des Behandlungswerkzeugs (4, 4') zumindest teilweise durchsetzbar ist, so dass die erste Spule (5, 5') und die Speichereinheit (7, 7'), insbesondere deren zweite Spule (6), ineinander oder nebeneinander anordenbar sind.

7. Medizinisches, insbesondere dentales, Handstück (1, 1') nach Anspruch 6, **dadurch gekennzeichnet, dass**
die Öffnung (14) des Trägers (13, 13') und die erste Spule (5, 5') konzentrisch zur Mittelachse (8, 8') der Hohlwelle (3, 3') angeordnet sind.

8. Medizinisches, insbesondere dentales, Handstück (1, 1') nach einem der Ansprüche 5 - 7, **dadurch gekennzeichnet, dass**
die erste Spule (5, 5') mit zumindest einer Leitung (15, 15') zur Energie- und / oder Datenversorgung verbunden ist, wobei der Träger (13, 13') die zumindest eine Leitung (15, 15') stützt.

9. Medizinisches, insbesondere dentales, Handstück (1, 1') nach einem der Ansprüche 5 - 8, **dadurch gekennzeichnet, dass**
der Träger (13, 13') eine der Werkzeugaufnahmeöffnung (16) des Handstücks (1, 1') zugewandte Seite und eine von der Werkzeugaufnahmeöffnung (16) des Handstücks (1, 1') abgewandte Seite aufweist, wobei zu beiden Seiten des Trägers (13, 13') Teile der Werkzeughalte-/Lösevorrichtung (9, 9') angeordnet sind.

10. Medizinisches, insbesondere dentales, Handstück (1, 1') nach einem der vorhergehenden Ansprüche, **dadurch gekennzeichnet, dass**
die erste Spule (5, 5') und / oder der Träger (13, 13') von zumindest einem Teil der Werkzeughalte-/Lösevorrichtung (9, 9'), insbesondere von dem beweglichen Druckdeckel (12) oder von einem mit dem beweglichen Druckdeckel (12) verbundenen Bauteil, umgreifbar oder umgriffen oder durchsetzt oder durchsetzbar ist.

11. Medizinisches, insbesondere dentales, Handstück (1, 1') nach einem der vorhergehenden Ansprüche, **dadurch gekennzeichnet, dass**
die erste Spule (5, 5') von einer elektrischen Isolierschicht umgeben ist, die insbesondere zumindest einen Luftspalt um die erste Spule (5, 5'), ein elektrisch nicht leitendes Material umfassendes Betätigungselement (20) oder einen elektrisch nicht leitendes Material umfassenden Träger (13) aufweist.

12. Medizinisches, insbesondere dentales, Handstück (1, 1') nach einem der vorhergehenden Ansprüche, **gekennzeichnet durch**
eine Werkzeughalte-/Lösevorrichtung (9, 9'), die zumindest ein eine Bohrung (17) der Hohlwelle (3, 3') durchsetzendes und durch die Bohrung (17) in die Hohlwelle (3, 3') ragendes Formelement (18), eine beweglich angeordnete, mit dem Formelement (18) zusammenwirkende Verriegelungshülse (19, 19') und ein Betätigungselement (20) zum Bewegen der Verriegelungshülse (19, 19') umfasst.

13. Medizinisches, insbesondere dentales, Handstück (1, 1') nach einem der vorhergehenden Ansprüche, **gekennzeichnet durch**
ein Behandlungswerkzeug (4, 4'), das einen Arbeitsabschnitt (4A), einen Schaftabschnitt zur Verbindung des Arbeitsabschnitts (4A) mit dem Handstück (1, 1') und eine Speichereinheit (7, 7') mit einer zweiten Spule (6) umfasst, wobei die Speichereinheit (7, 7') am Schaftabschnitt angeordnet ist.

14. Medizinisches, insbesondere dentales, Handstück (1, 1') nach Anspruch 13, **dadurch gekennzeichnet, dass**
die Speichereinheit (7, 7') des Behandlungswerkzeugs (4, 4') des Weiteren einen elektronischen Chip mit einem Mikrocomputer und einem elektronisch programmierbaren Speicher (42) umfasst, wobei der Speicher (42) als Lesespeicher oder als lesbarer und beschreibbarer Speicher ausgebildet ist und wobei die induktive Kopplung der beiden als Antennen wirkenden Spulen (5, 5'; 6) sowohl der Energieversorgung der Speichereinheit (7, 7') als auch dem Datenaustausch dient.

15. Induktive Energie- und Datentransfereinheit zur Übermittlung von Energie und Daten zwischen einer Steuer- und / oder Versorgungseinheit, einem medizinischen, insbesondere dentalen, Handstück (1, 1') und zumindest einem durch das medizinische, insbesondere dentale, Handstück (1, 1') antreibbaren Behandlungswerkzeug (4, 4') mit zumindest einem Teil des Energie- und / oder Datentransfers zwischen dem Behandlungswerkzeug (4, 4') und der Steuer- und / oder Versorgungseinheit über oder durch das Handstück (1, 1'), **gekennzeichnet durch**
ein medizinisches, insbesondere dentales, Handstück (1, 1') nach einem der vorhergehenden Ansprüche.

## Claims

1. A medical, in particular dental, handpiece (1, 1') comprising an outer shell (2), a hollow shaft (3, 3') arranged in the outer shell (2, 2') and inducible to a driving movement for accommodating a treatment tool (4, 4') and a first coil (5, 5') for inductive coupling with a memory unit (7, 7') of the treatment tool (4, 4') comprising a second coil (6), wherein the hollow shaft (3, 3') extends along a central axis (8, 8') and comprises an axial extent (A) and radial extent (R) relative to the central axis (8, 8'), **characterized in that**
the first coil (5, 5') is arranged within or beyond of the axial extent (A) of the hollow shaft (3, 3') and that at least a portion of the first coil (5, 5') is arranged within the radial extent (R) of the hollow shaft (3, 3').

2. The medical, in particular dental, handpiece (1, 1') according to claim 1, **characterized in that**
the first coil (5, 5') is arranged at or adjacent the end (10) of the hollow shaft (3, 3') facing the tool-holding/releasing device (9, 9') of the handpiece (1, 1').

3. The medical, in particular dental, handpiece (1, 1') according to claim 1 or 2, **characterized in that**
the first coil (5, 5') is arranged in a cavity (11) between the end (10) of the hollow shaft (3, 3') facing the tool-holding/releasing device (9, 9') of the handpiece (1, 1') and a part of the tool-holding/releasing device (9, 9'), in particular an operating element (20) of the tool-holding/releasing device (9, 9'), e.g., the pressure cover (12).

4. The medical, in particular dental, handpiece (1, 1') according to any one of the preceding claims, **characterized in that**
the first coil (5, 5') is arranged immovably in the handpiece (1, 1') with respect to the hollow shaft (3, 3').

5. The medical, in particular dental, handpiece (1, 1') according to any one of the preceding claims, **characterized in that**
the first coil (5, 5') is arranged on a carrier (13, 13'), in particular a plane carrier, which is immovable with respect to the hollow shaft (3, 3').

6. The medical, in particular dental, handpiece (1, 1') according to claim 5, **characterized in that**
the carrier (13, 13') comprises an opening (14) around which the first coil (5, 5') is arranged and which is dimensioned such that it can be penetrated at least partially by the memory unit (7, 7') of the treatment tool (4, 4') so that the first coil (5, 5') and the memory unit (7, 7'), in particular the second coil (6) thereof, can be arranged one inside the other or side-by-side next to one another.

7. The medical, in particular dental, handpiece (1, 1') according to claim 6, **characterized in that**
the opening (14) of the carrier (13, 13') and the first coil (5, 5') are arranged concentrically with the central axis (8, 8') of the hollow shaft (3, 3').

8. The medical, in particular dental, handpiece (1, 1') according to any one of claims 5 - 7, **characterized in that**
the first coil (5, 5') is connected to at least one line (15, 15') for power and/or data supply, wherein the carrier (13, 13') supports the at least one line (15, 15').

9. The medical, in particular dental, handpiece (1, 1') according to any one of claims 5 - 8, **characterized in that**
the carrier (13, 13') comprises a side facing the tool receptacle opening (16) of the handpiece (1, 1') and a side facing away from the tool receptacle opening (16) of the handpiece (1, 1'), wherein parts of the tool-holding/releasing device (9, 9') are arranged on both sides of the carrier (13, 13').

10. The medical, in particular dental, handpiece (1, 1') according to any one of the preceding claims, **characterized in that**
the first coil (5, 5') and/ or the carrier (13, 13') is/ are surrounded or surroundable or penetrated or penetratable by at least a part of the tool-holding/releasing device (9, 9'), in particular by the movable pressure cover (12) or by a component connected to the movable pressure cover (12).

11. The medical, in particular dental, handpiece (1, 1') according to any one of the preceding claims, **characterized in that**
the first coil (5, 5') is surrounded by an electric insulation layer, which comprises in particular at least one air gap around the first coil (5, 5'), an operating element (20) comprising an electrically nonconductive material or a carrier (13) comprising an electrically nonconductive material.

12. The medical, in particular dental, handpiece (1, 1') according to any one of the preceding claims, **characterized by**
a tool-holding/releasing device (9, 9') comprising at least one shaped element (18) penetrating through a bore (17) of the hollow shaft (3, 3') and protruding through the bore (17) into the hollow shaft (3, 3'), a movably arranged locking sleeve (19, 19') cooperating with the at least one shaped element (18) and an operating element (20) for moving the locking sleeve (19, 19').

13. The medical, in particular dental, handpiece (1, 1') according to any one of the preceding claims, **characterized by**
a treatment tool (4, 4') comprising a working section (4A), a shaft section for connecting the working section (4A) to the handpiece (1, 1') and a memory unit (7, 7') having a second coil (6), wherein the memory unit (7, 7') is arranged on the shaft section.

14. The medical, in particular dental, handpiece (1, 1') according to claim 13, **characterized in that**
the memory unit (7, 7') of the treatment tool (4, 4') additionally comprises an electronic chip having a microcomputer and an electronically programmable memory (42), wherein the memory (42) is designed either as a read-only memory or as a random-access memory and wherein the inductive coupling of the two coils (5, 5'; 6) acting as antennas serves to supply power to the memory unit (7, 7') as well as for data exchange.

15. An inductive power and data transfer unit for transmitting power and data between a control and/ or supply unit, a medical, in particular dental, handpiece (1, 1') and at least one treatment tool (4, 4') drivable by the medical, in particular dental, handpiece (1, 1') with at least a portion of the power and/ or data transfer between the treatment tool (4, 4') and the control and/ or supply unit via or through the handpiece (1, 1'), **characterized by**
a medical, in particular dental, handpiece (1, 1') according to any one of the preceding claims.

## Revendications

1. Pièce à main (1, 1') médicale, en particulier dentaire, comprenant une enveloppe extérieure (2), un arbre creux (3, 3') disposé dans l'enveloppe extérieure (2, 2') et pouvant être mis en mouvement d'entraînement pour recevoir un outil de traitement (4, 4') et une première bobine (5, 5') pour le couplage inductif avec une unité de mémoire (7, 7') de l'outil de traitement (4, 4') comprenant une deuxième bobine (6), dans laquelle l'arbre creux (3, 3') s'étend le long d'un axe central (8, 8') et présente, par rapport à l'axe central (8, 8'), une extension axiale (A) et une extension radiale (R), **caractérisée en ce que**
la première bobine (5, 5') est disposée à l'intérieur ou à l'extérieur de l'extension axiale (A) de l'arbre creux (3, 3') et qu'au moins une partie de la première bobine (5, 5') est disposée à l'intérieur de l'extension radiale (R) de l'arbre creux (3, 3').

2. Pièce à main (1, 1') médicale, en particulier dentaire selon la revendication 1, **caractérisée en ce que**
la première bobine (5, 5') est disposée à l'extrémité (10) de l'arbre creux (3, 3') tournée vers le dispositif de serrage/desserrage d'outil (9, 9') de la pièce à main (1, 1') ou en jonction avec l'extrémité (10) de l'arbre creux (3, 3') tournée vers le dispositif de serrage/desserrage d'outil (9, 9') de la pièce à main (1, 1').

3. Pièce à main (1, 1') médicale, en particulier dentaire selon la revendication 1 ou 2, **caractérisée en ce que**
la première bobine (5, 5') est disposée dans un espace creux (11) entre l'extrémité (10) de l'arbre creux (3, 3') tournée vers le dispositif de serrage/desserrage d'outil (9, 9') de la pièce à main (1, 1') et une partie du dispositif de serrage/desserrage d'outil (9, 9'), en particulier un élément d'actionnement (20) du dispositif de serrage/desserrage d'outil (9, 9'), par exemple le couvercle de pression (12).

4. Pièce à main (1, 1') médicale, en particulier dentaire selon l'une des revendications précédentes, **caractérisée en ce que**
la première bobine (5, 5') est disposée de façon immobile par rapport à l'arbre creux (3, 3') dans la pièce à main (1, 1').

5. Pièce à main (1, 1') médicale, en particulier dentaire selon l'une des revendications précédentes, **caractérisée en ce que**
la première bobine (5, 5') est disposée sur un support (13, 13') immobile, en particulier plan, par rapport à l'arbre creux (3, 3').

6. Pièce à main (1, 1') médicale, en particulier dentaire selon la revendication 5, **caractérisée en ce que**
le support (13, 13') présente une ouverture (14) autour de laquelle la première bobine (5, 5') est disposée et qui est dimensionnée de manière à pouvoir être au moins partiellement traversée pour l'unité de mémoire (7, 7') de l'outil de traitement (4, 4') de sorte que la première bobine (5, 5') et l'unité de mémoire (7, 7'), en particulier la deuxième bobine (6) de celle-ci, peuvent être disposées l'une dans l'autre ou l'une à côté de l'autre.

7. Pièce à main (1, 1') médicale, en particulier dentaire selon la revendication 6, **caractérisée en ce que**
l'ouverture (14) du support (13, 13') et la première bobine (5, 5') sont disposées de manière concentrique à l'axe central (8, 8') de l'arbre creux (3, 3').

8. Pièce à main (1, 1') médicale, en particulier dentaire selon l'une des revendications 5 - 7, **caractérisée en ce que**
la première bobine (5, 5') est reliée à au moins une ligne (15, 15') pour l'alimentation en énergie et/ou données, dans laquelle le support (13, 13') soutient l'au moins une ligne (15, 15').

9. Pièce à main (1, 1') médicale, en particulier dentaire selon l'une des revendications 5 - 8, **caractérisée en ce que**
le support (13, 13') présente un côté tourné vers l'ouverture de réception d'outil (16) de la pièce à main (1, 1') et un côté tournant le dos à l'ouverture de réception d'outil (16) de la pièce à main (1, 1'), dans laquelle des parties du dispositif de serrage/desserrage d'outil (9, 9') sont disposées des deux côtés du support (13, 13').

10. Pièce à main (1, 1') médicale, en particulier dentaire selon l'une des revendications précédentes, **caractérisée en ce que**
la première bobine (5, 5') et/ou le support (13, 13') peuvent être entourés ou sont entourés ou sont traversés ou traversables par au moins une partie du dispositif de serrage/desserrage d'outil (9, 9'), en particulier par le couvercle de pression mobile (12) ou par un élément relié au couvercle de pression mobile (12).

11. Pièce à main (1, 1') médicale, en particulier dentaire selon l'une des revendications précédentes, **caractérisée en ce que**
la première bobine (5, 5') est entourée par une couche électrique isolante qui présente en particulier au moins un entrefer autour de la première bobine (5, 5'), un élément d'actionnement (20) comprenant un matériau non électroconducteur ou un support (13) comprenant un matériau non électroconducteur.

12. Pièce à main (1, 1') médicale, en particulier dentaire selon l'une des revendications précédentes, **caractérisée par**
un dispositif de serrage/desserrage d'outil (9, 9') qui comprend au moins un élément profilé (18) traversant un alésage (17) de l'arbre creux (3, 3') et pénétrant à travers l'alésage (17) dans l'arbre creux (3, 3'), un manchon de verrouillage (19, 19'), disposé de façon mobile, coopérant avec l'élément profilé (18) et un élément d'actionnement (20) pour déplacer le manchon de verrouillage (19, 19').

13. Pièce à main (1, 1') médicale, en particulier dentaire selon l'une des revendications précédentes, **caractérisée par**
un outil de traitement (4, 4') qui comprend une partie de travail (4A), une partie de manche pour le raccordement de la partie de travail (4A) à la pièce à main (1, 1') et une unité de mémoire (7, 7') avec une deuxième bobine (6), dans laquelle l'unité de mémoire (7, 7') est disposée au niveau de la partie de manche.

14. Pièce à main (1, 1') médicale, en particulier dentaire selon la revendication 13, **caractérisée en ce que**
l'unité de mémoire (7, 7') de l'outil de traitement (4, 4') comprend en outre une puce électronique avec un micro-ordinateur et une mémoire programmable électroniquement (42), dans laquelle la mémoire (42) est réalisée en tant que mémoire de lecture ou en tant que mémoire lisible et inscriptible et dans laquelle le couplage inductif des deux bobines (5, 5' ; 6) agissant en tant qu'antennes sert à l'alimentation en énergie de l'unité de mémoire (7, 7') tout comme également à l'échange de données.

15. Unité inductive de transfert d'énergie et de données (7, 7') pour la transmission d'énergie et de données entre une unité de commande et/ou d'alimentation, une pièce à main (1, 1') médicale, en particulier dentaire et au moins un outil de traitement (4, 4') pouvant être entraîné par la pièce à main (1, 1') médicale, en particulier dentaire avec au moins une partie du transfert d'énergie et/ou de données entre l'outil de traitement (4, 4') et l'unité de commande et/ou d'alimentation via ou par l'intermédiaire de la pièce à main (1, 1'), **caractérisée par**
une pièce à main (1, 1') médicale, en particulier dentaire selon l'une des revendications précédentes.
